(19) Europäisches Patentamt / European Patent Office / Office européen des brevets

(11) **EP 4 783 467 A1**

(12) **EUROPEAN PATENT APPLICATION**
published in accordance with Art. 153(4) EPC

(43) Date of publication:
**29.07.2026 Bulletin 2026/31**

(21) Application number: **23952469.7**

(22) Date of filing: **18.09.2023**

(51) International Patent Classification (IPC):
**H04B 1/04** *(2006.01)*

(52) Cooperative Patent Classification (CPC):
**H04B 1/04**

(86) International application number:
**PCT/CN2023/119443**

(87) International publication number:
**WO 2025/059802 (27.03.2025 Gazette 2025/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **ZHENG, Xufei
Guangdong 523860 (CN)**

(74) Representative: **Mewburn Ellis LLP
Aurora Building
Counterslip
Bristol BS1 6BX (GB)**

(54) **SIGNAL PROCESSING METHODS, FIRST DEVICES AND SECOND DEVICES**

(57)  This disclosure relates to a signal processing method, a first device, a second device, a chip, a computer-readable storage medium, a computer program product, a computer program, and a communication system. The method includes the following. The first device performs predistortion on a first digital signal output by a baseband link by using a first artificial intelligence (AI) model to obtain a second digital signal, and the first device processes the second digital signal into a first radio frequency (RF) signal. The embodiments of the disclosure can enhance compensation effect of predistortion, which helps improve communication performance.

FIRST DEVICE PERFORMS PREDISTORTION ON FIRST DIGITAL SIGNAL OUTPUT BY BASEBAND LINK BY USING FIRST ARTIFICIAL INTELLIGENCE (AI) MODEL TO OBTAIN SECOND DIGITAL SIGNAL — S510

FIRST DEVICE PROCESSES SECOND DIGITAL SIGNAL INTO FIRST RADIO FREQUENCY (RF) SIGNAL — S520

FIG. 5

## Description

TECHNICAL FIELD

This disclosure relates to the field of communication, and particularly, to a signal processing method, a first device, a second device, a chip, a computer-readable storage medium, a computer program product, a computer program, and a communication system.

BACKGROUND

Radio frequency (RF) links and baseband links both play important roles in contemporary wireless communication systems. The baseband link is mainly responsible for signal processing and protocol processing, including modulation and demodulation of digital signals, channel coding and decoding, source coding and decoding, and some signaling processing. The RF link is mainly responsible for converting a signal processed by the baseband link into an electromagnetic signal suitable for transmission through digital-to-analog conversion (DAC), and transmitting the signal; or for receiving an external signal, performing analog-to-digital conversion (ADC) for the received signal, and transmitting the signal to the baseband link.

However, non-ideality of RF exists in communication transceivers. The RF link can introduce various types of noises into the signal and can generate nonlinear distortion. As the frequency used and the required bandwidth continue to increase in the wireless communication, degradation in communication performance caused by the non-ideality of RF becomes increasingly non-negligible.

SUMMARY

A signal processing method, a first device, a second device, a chip, a computer-readable storage medium, a computer program product, a computer program, and a communication system are provided in embodiments of the disclosure for improving communication performance.

A signal processing method is provided in embodiments of the disclosure. The method includes the following. A first device performs predistortion on a first digital signal output by a baseband link by using a first artificial intelligence (AI) model to obtain a second digital signal. The first device processes the second digital signal into a first radio frequency (RF) signal.

A signal processing method is provided in embodiments of the disclosure. The method includes the following. A second device receives a first RF signal sent by a first device. The first RF signal is obtained by processing a second digital signal. The second digital signal is obtained by performing predistortion on a first digital signal output by a baseband link of the first device by using a first AI model.

A first device is provided in embodiments of the disclosure. The first device includes a first processing module configured to perform predistortion on a first digital signal output by a baseband link by using a first AI model to obtain a second digital signal, and to process the second digital signal into a first RF signal.

A second device is provided in embodiments of the disclosure. The second device includes a second communication module configured to receive a first RF signal sent by a first device. The first RF signal is obtained by processing a second digital signal by the first device. The second digital signal is obtained by performing predistortion on a first digital signal output by a baseband link of the first device by using a first AI model.

A first device is provided in embodiments of the disclosure. The first device includes a transceiver, a processor, and a memory. The memory is configured to store computer programs. The transceiver is configured to communicate with other devices. The processor is configured to invoke and execute the computer programs stored in the memory to cause the first device to implement the aforementioned signal processing methods.

A second device is provided in embodiments of the disclosure. The second device includes a transceiver, a processor, and a memory. The memory is configured to store computer programs. The transceiver is configured to communicate with other devices. The processor is configured to invoke and execute the computer programs stored in the memory to cause the second device to implement the aforementioned signal processing methods.

A chip is provided in embodiments of the disclosure. The chip is configured to implement the aforementioned signal processing methods.

Specifically, the chip includes a processor configured to invoke and execute computer programs stored in a memory to cause a device equipped with the chip to implement the aforementioned signal processing methods.

A computer-readable storage medium is provided in embodiments of the disclosure. The computer-readable storage medium is configured to store computer programs, which when executed by a device, are operable with the device to implement the aforementioned signal processing methods.

A computer program product is provided in embodiments of the disclosure. The computer program product includes computer program instructions which are operable with a computer to implement the aforementioned signal processing methods.

A computer program is provided in embodiments of the disclosure. The computer program, when executed by a computer, is operable with the computer to implement the aforementioned signal processing methods.

A communication system is provided in embodiments of the disclosure. The communication system includes a first device and a second device both configured to implement the aforementioned methods.

In embodiments of the disclosure, the first AI model is configured to perform predistortion on the first digital signal output by the baseband link to obtain the second digital signal. That is, predistortion is performed with the AI model to compensate for noise and non-linear distortion caused by non-ideality of an RF link, which can help improve compensation effect of predistortion, thereby improving communication performance.

BRIEF DESCRIPTION OF THE DRAWINGS

FIG. 1 is a schematic diagram of a communication system according to embodiments of the disclosure.
FIG. 2 is a schematic diagram illustrating the non-linear behavior of a power amplifier (PA).
FIG. 3 is a schematic diagram illustrating an effect of phase noise on a 16 quadrature amplitude modulation (QAM) constellation diagram.
FIG. 4A is a schematic diagram illustrating connection of a predistorter and a power amplifier (PA).
FIG. 4B is a schematic diagram illustrating a power amplifier feature after connecting a predistorter and a PA.
FIG. 5 is a schematic flowchart of a signal processing method according to an embodiment of the disclosure.
FIG. 6 is a schematic diagram of a first AI model in an embodiment of the disclosure.
FIG. 7A is a schematic diagram of an application mode of a second AI model in an embodiment of the disclosure.
FIG. 7B is a schematic diagram of another application mode of a second AI model in an embodiment of the disclosure.
FIG. 8 is a schematic diagram of a second AI model in an embodiment of the disclosure.
FIG. 9A is a schematic diagram of a mode of network-device-triggered monitoring of a radio frequency (RF) performance indicator.
FIG. 9B is a schematic diagram of another mode of network-device-triggered monitoring of an RF performance indicator.
FIG. 10A is a schematic diagram of a mode of condition-triggered monitoring of an RF performance indicator.
FIG. 10B is a schematic diagram of another mode of condition-triggered monitoring of an RF performance indicator.
FIG. 11 is a schematic diagram illustrating fine-tuning of the first AI model in an embodiment of the disclosure.
FIG. 12 is a schematic flowchart of a signal processing method according to another embodiment of the disclosure.

FIG. 13 is a schematic block diagram of a first device according to an embodiment of the disclosure.
FIG. 14 is a schematic block diagram of a first device according to another embodiment of the disclosure.
FIG. 15 is a schematic block diagram of a first device according to another embodiment of the disclosure.
FIG. 16 is a schematic block diagram of a first device according to another embodiment of the disclosure.
FIG. 17 is a schematic block diagram of a first device according to another embodiment of the disclosure.
FIG. 18 is a schematic block diagram of a first device according to another embodiment of the disclosure.
FIG. 19 is a schematic block diagram of a second device according to an embodiment of the disclosure.
FIG. 20 is a schematic block diagram of a second device according to another embodiment of the disclosure.
FIG. 21 is a schematic block diagram of a second device according to another embodiment of the disclosure.
FIG. 22 is a schematic block diagram of a communication device according to embodiments of the disclosure.
FIG. 23 is a schematic block diagram of a chip according to embodiments of the disclosure.
FIG. 24 is a schematic block diagram of a communication system according to embodiments of the disclosure.

DETAILED DESCRIPTION

The technical solutions of embodiments of the disclosure will be described below with reference to the accompanying drawings in embodiments of the disclosure.

The technical solutions of embodiments of the disclosure are applicable to various communication systems, for example, a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (WiFi), a 5th-generation (5G) communication system, a 6th-generation (6G) communication system or other communication systems, etc.

Generally speaking, a conventional communication system generally supports a limited quantity of connections and therefore is easy to implement. However, with development of communication technology, a mobile communication system will not only support conventional communication but also support, for example, device to device (D2D) communication, machine to machine (M2M) communication, machine type communication (MTC), vehicle to vehicle (V2V) communication, or vehicle to everything (V2X) communication, etc. Embodiments of the disclosure can also be applied to these communication systems.

In an implementation, the communication system in embodiments of the disclosure may be applied to a carrier aggregation (CA) scenario, or may be applied to a dual connectivity (DC) scenario, or may be applied to a standalone (SA) network deployment scenario.

In an implementation, the communication system in embodiments of the disclosure is applicable to an unlicensed spectrum, and an unlicensed spectrum may be regarded as a shared spectrum. Or the communication system in embodiments of the disclosure is applicable to a licensed spectrum, and a licensed spectrum may be regarded as a non-shared spectrum.

Various embodiments of the disclosure are described in connection with a network device and a terminal device. The terminal device may also be referred to as a user equipment (UE), an access terminal, a subscriber unit, a subscriber station, a mobile station, a remote station, a remote terminal, a mobile device, a user terminal, a terminal, a wireless communication device, a user agent, or a user device, etc.

The terminal device may be a station (ST) in a WLAN, a cellular radio telephone, a cordless telephone, a session initiation protocol (SIP) telephone, a wireless local loop (WLL) station, a personal digital assistant (PDA), a handheld device or a computing device with wireless communication functions, other processing devices coupled with a wireless modem, an in-vehicle device, a wearable device, and a terminal device in a next-generation communication system, for example, a terminal device in an NR network, or a terminal device in a future evolved public land mobile network (PLMN), etc.

In embodiments of the disclosure, the terminal device may be deployed on land, which includes indoor or outdoor, handheld, wearable, or in-vehicle. The terminal device may also be deployed on water (such as ships, etc.). The terminal device may also be deployed in the air (such as airplanes, balloons, satellites, etc.).

In embodiments of the disclosure, the terminal device may be a mobile phone, a pad, a computer with wireless transceiver functions, a virtual reality (VR) terminal device, an augmented reality (AR) terminal device, a wireless terminal device in industrial control, a wireless terminal device in self driving, a wireless terminal device in remote medicine, a wireless terminal device in smart grid, a wireless terminal device in transportation safety, a wireless terminal device in smart city, or a wireless terminal device in smart home, etc.

By way of explanation rather than limitation, in embodiments of the disclosure, the terminal device may also be a wearable device. The wearable device may also be called a wearable smart device, which is a generic term of wearable devices obtained through intelligent design and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

In embodiments of the disclosure, the network device may be a device configured to communicate with a mobile device, and the network device may be an access point (AP) in a WLAN, or may be an evolutional Node B (eNB or eNodeB) in LTE, or a relay station or AP, or an in-vehicle device, a wearable device, a network device (gNB) in an NR network, a network device in a future evolved PLMN, or a network device in an NTN, etc.

By way of explanation rather than limitation, in embodiments of the disclosure, the network device may be mobile. For example, the network device may be a mobile device. Optionally, the network device may be a satellite or a balloon base station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station deployed on land or water.

In embodiments of the disclosure, the network device serves a cell, and the terminal device communicates with the network device on a transmission resource (for example, a frequency-domain resource or a spectrum resource) for the cell. The cell may be a cell corresponding to the network device (for example, a base station). The cell may belong to a macro base station, or may belong to a base station corresponding to a small cell. The small cell may include: a metro cell, a micro cell, a pico cell, a femto cell, and the like. These small cells are characterized by small coverage and low transmission power and are adapted to provide data transmission service with high-rate.

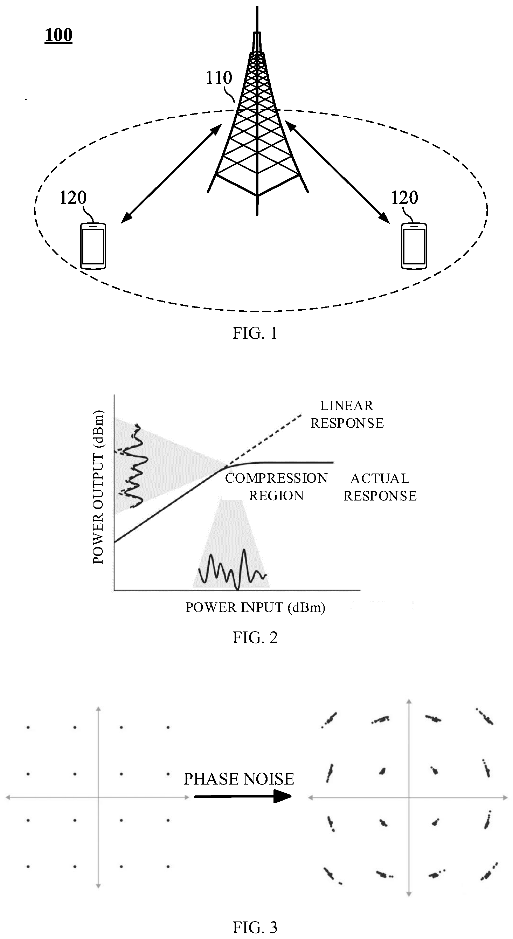

FIG. 1 exemplarily illustrates a communication system 100. The communication system includes one network device 110 and two terminal devices 120. In an implementation, the communication system 100 may include multiple network devices 110, and there can be other quantities of terminal devices 120 in a coverage area of each of the network devices 110. Embodiments of the disclosure are not limited in this regard.

It can be understood that, in embodiments of the disclosure, a device with communication functions in a network/system can be referred to as a "communication device". Taking the communication system illustrated in FIG. 1 as an example, the communication device may include the network device and the terminal device(s) that have communication functions. The network device and the terminal device(s) can be the devices in embodiments of the disclosure and will not be elaborated again herein. The communication device may further include other devices such as a network controller, a mobility management entity, or other network entities in the communication system 100, and embodiments of the disclosure are not limited in this regard.

It can be understood that, the terms "system" and "network" herein are usually used interchangeably throughout this disclosure. The term "and/or" herein only describes an association relationship between associated objects, which means that there can be three relationships. For example, A and/or B can mean A alone, both A and B exist, and B alone. In addition, the character "/" herein generally indicates that the associated objects are in an "or" relationship.

It can be understood that, "indication" referred to in embodiments of the disclosure may be a direct indication, may be an indirect indication, or may mean that there is an association relationship. For example, A indicates B may mean that A directly indicates B, for instance, B can be obtained according to A; may mean that A indirectly indicates B, for instance, A indicates C, and B can be obtained according to C; or may mean that that there is an association relationship between A and B.

In the elaboration of embodiments of the disclosure, the term "correspondence" may mean that there is a direct or indirect correspondence between the two, may mean that there is an association between the two, or may mean a relationship of indicating and indicated or configuring and configured, etc.

To facilitate understanding of the technical solutions of embodiments of the disclosure, the relevant technologies of embodiments of the disclosure will be described below. The following relevant technologies, as optional solutions, can be arbitrarily combined with the technical solutions of embodiments of the disclosure and all shall fall into the protection scope of the embodiments of the disclosure.

(1) Radio Frequency (RF) Link

A radio frequency (RF) link and a baseband link both play important roles in modern wireless communication systems. The baseband link is mainly responsible for signal processing and protocol processing, including modulation and demodulation of digital signals, channel coding and decoding, source coding and decoding, and some signaling processing. The RF link is mainly responsible for converting a signal processed by the baseband link into an electromagnetic signal suitable for transmission through digital-to-analog conversion (DAC), and transmitting the signal; or for receiving an external signal, performing analog-to-digital conversion (ADC) for the received signal, and transmitting the signal to the baseband link.

Regarding a signal transmitter, a signal transmitted through the baseband link has a very low frequency, which is not suitable for long-distance transmission (an electromagnetic wave with a frequency lower than 100 kilohertz (kHz) will be absorbed by the ground surface and cannot propagate effectively; an electromagnetic wave with a frequency higher than 100 kHz can propagate in the air and can be reflected by the ionosphere at a periphery of the atmosphere, allowing for long-distance transmission). Therefore, the RF link first needs to up-convert the signal from a low-frequency to a high-frequency (such as 900 megahertz (MHz), 3.5 gigahertz (GHz), 28 GHz, etc.). In addition to frequency conversion, the RF link further needs to boost the transmission power of the signal with a power amplifier (PA) before the signal is sent to an antenna. After the signal reaches the antenna, the signal is generally filtered by a filter to eliminate interference and clutter, and is eventually transmitted through antenna elements. Regarding a signal receiver, the processing in the RF link is basically the reverse of that in the transmitter, which will not be elaborated again herein.

(2) Non-ideality of RF Link

In the design of wireless communication systems, it is necessary to strike a balance between performance and cost. Due to cost constraints, complex RF circuit structures and expensive components are often not suitable for practical systems. Meanwhile, for mass-produced devices, it is impractical to perform targeted circuit optimization and adjustment for each individual device. These factors lead to non-ideality of RF in a communication transceiver, which introduces various types of noise into the signal and causes non-linear distortion. As the frequency used and the required bandwidth continue to increase in the wireless communication, degradation in communication performance caused by the non-ideality of RF becomes increasingly non-negligible.

Non-linear behavior of PA: radio frequency power amplifier (RF PA) is one of the core components of the transmitter and can amplify an analog signal. However, as a typical non-linear component, the PA face a trade-off between efficiency and linearity. As illustrated in FIG. 2, on the one hand, when the PA is operating in a high-efficiency region, severe non-linear distortion is generated, which increases a bit error rate (BER) of a demodulated signal and causes out-of-band spectrum leakage, and further interferes with communication users from adjacent channel. On the other hand, ensuring good linearity implies high rollback, leading to reduced power amplification efficiency and output power, which brings about two major issues: cost and thermal management. Therefore, research on traditional power amplifier aims to strike a balance between the metrics of efficiency and linearity.

Inphase/quadrature imbalance (I/Q imbalance): In the RF link, signal processing is implemented based on an analog circuit, and it is difficult for the analog circuit to achieve as precise matching (equal amplitude and a phase difference of exact 90 degrees) as in digital signal processing when processing a I/Q modulated signal. This mismatch in amplitude and phase is referred to as I/Q imbalance, which results in mirror components in the signal spectrum and increases the difficulty in signal demodulation.

Phase noise: Due to the non-ideality of an oscillator, the RF link may introduce the phase noise into the signal. As the name implies, phase noise has a negative impact on communication systems that modulates signal in phase. 4th-generation (4G)/5G cellular communication systems widely adopt signal modulation methods based on phase and amplitude, such as quadrature phase shift keying (QPSK)/16 quadrature amplitude modulation (QAM)/64 QAM/256 QAM. Phase noise can cause rotation of a constellation diagram of a modulated signal, and the higher the amplitude level of the signal, the greater the rotation amplitude, which may significantly increase the difficulty in signal demodulation. FIG. 3 illustrates an effect of phase noise on a 16 QAM constellation diagram.

(3) Digital Predistortion (DPD)

Simply put, digital predistortion involves artificially introducing a predistortion during digital signal processing, and such predistortion is exactly opposite to the non-linear distortion introduced by the RF link, to compensate for the non-linear distortion.

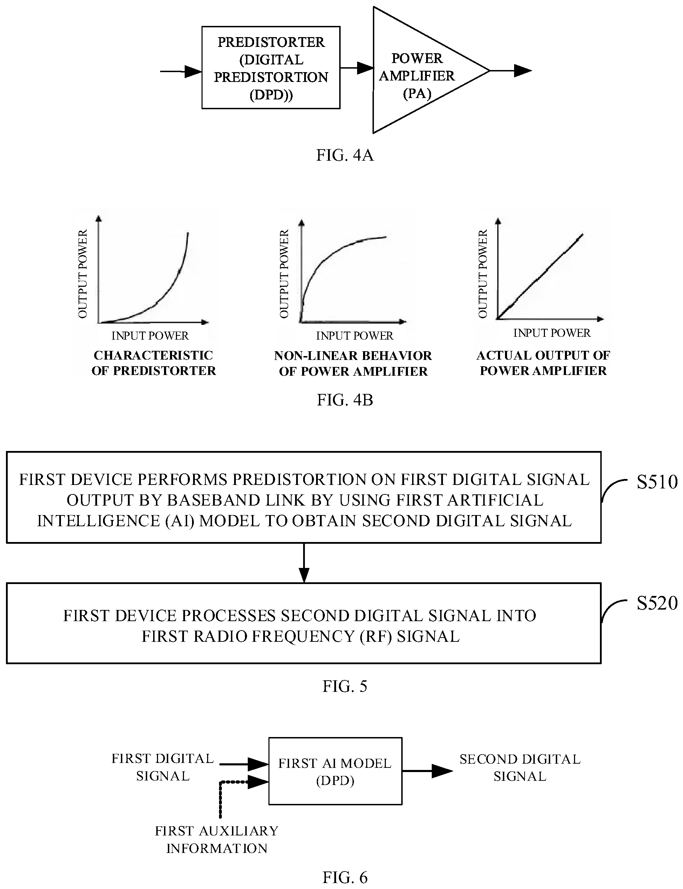

The most common digital predistortion schemes are used for compensating the distortion generated when the PA operates in its non-linear region. Eventually, the efficiency and operating range of the PA can be significantly improved, and achieves a compensation effect of "two negatives make a positive" is achieved. As illustrated in FIG. 4A, the predistorter is connected to the PA, and power amplifier feature is illustrated in FIG. 4B. Herein, the digital predistortion distorts the original signal in a direction opposite to that of the PA's distortion, thereby compensating for the non-linear effects of the PA in a final output signal (an actual output of the PA).

The challenge for digital predistortion technology lies in the fact that the noise intensity and non-linear distortion behavior introduced by an RF component are subject to dynamic changes due to various factors, such as temperature, voltage of power, degree of component-aging, frequency, and bandwidth. Therefore, although it is theoretically possible to design a correct predistortion algorithm for RF components with well-defined characteristic, performing such work for each individual component is economically impractical.

To address the aforementioned deviation, some traditional predistortion algorithms have incorporated a feedback mechanism, that is, an RF output signal is sampled and is used for calibrating the predistortion algorithm. However, this approach is relatively complex and computationally intensive. Meanwhile, a feedback channel is responsible for collecting non-linear information of the RF component, the non-ideality of the algorithm or hardware can directly affect the accuracy of the predistorter, leading to spectral regrowth of non-linear power amplification. Considering that the sampling rate of ADC in the feedback channel usually needs to be 3 to 5 times the signal bandwidth to collect sufficient non-linear information, the increasing signal bandwidth and the application of large-scale multiple-input multiple-output (MIMO) transmitter making the cost associated with high-speed and high-precision ADC has become increasingly prominent. Therefore, how to develop digital predistortion technology with low complexity based on low-precision or low-rate ADC is an urgent issue to be solved.

FIG. 5 is a schematic flowchart of a signal processing method according to an embodiment of the disclosure. The method can optionally be applied to the system illustrated in FIG. 1, but is not limited thereto. The method includes at least part of the following content.

S510: A first device performs predistortion on a first digital signal output by a baseband link by using a first artificial intelligence (AI) model to obtain a second digital signal.

S520: The first device processes the second digital signal into a first radio frequency (RF) signal.

In the aforementioned signal processing method, the first device may be a terminal device or a network device. The aforementioned method is applicable for the first device to process a signal to-be-transmitted, that is, the first device can send the first RF signal after obtaining the first RF signal. Specifically, the first device sends the first RF signal to a second device. The second device may be a terminal device or a network device.

That is to say, the embodiments of the disclosure can be applied to one of the following communication scenarios.

Scenario 1: The first device is a terminal device, and the second device is a network device.

Scenario 2: The first device is a network device, and the second device is a terminal device.

Scenario 3: The first device is a first terminal device, and the second device is a second terminal device.

Scenario 4: The first device is a first network device, and the second device is a second network device.

The implementing process of the embodiments of the disclosure mainly involves that the first device processes the signal to-be-transmitted, therefore, in some descriptions, the first device may further be referred to as a sender, a transmitter, a transmitting side, a transmitting device, etc., and the second device may further be referred to as a receiver, a receiving side, a receiving device, etc.

In the embodiment of the disclosure, the first digital signal is a signal output by the baseband link. The baseband link is configured to perform baseband processing on an input signal (i.e., an information bit to-be-transmitted), such as channel coding, scrambling, constellation modulation, precoding, resource element mapping, orthogonal frequency division multiplexing (OFDM) signal modulation, etc. Exemplarily, the first digital signal may be a complex signal carrying the information bit to-be-transmitted.

According to the aforementioned step S510, the first AI model is configured to perform predistortion on the first digital signal to obtain the second digital signal. That is, the first AI model is configured to perform predistortion, an input of the first AI model includes the first digital signal, and an output of the first AI model includes the second digital signal. Herein, predistortion refers to a processing to compensate for noise and non-linear distortion introduced by an RF link, and the form of such processing is not limited. In practical applications, the first AI model may be an artificial neural network-based model or may be a machine learning model. The artificial neural network-based model may be, for example, a deep neural network (DNN) model, a convolutional neural network (CNN) model, a recurrent neural network (RNN) model, or a transformer model, etc. The machine learning model may be, for example, a logistic regression model, a decision-making-tree model, etc.

In the aforementioned step S520, the first device may use the RF link to process the second digital signal into the first RF signal. In other words, the second digital signal is a signal input to the RF link, and the RF link is configured to process the input signal into the first RF signal suitable for transmission. Exemplarily, the RF link can be configured to perform digital-to-analog conversion (DAC) on the input second digital signal before converting the input second digital signal into the first RF signal. For example, the RF link includes a DAC module, an up-conversion module, a power amplifier (PA), etc.

In the aforementioned method, before the signal to-be-transmitted reaches the RF link, predistortion is performed by using the first AI model to compensate for noise and non-linear distortion introduced due to the non-ideality of the RF link, therefore, a non-linear processing capability of the AI model can be utilized to improve the compensation effect of predistortion, and the communication performance can be improved. Specifically, the non-linear distortion introduced by the RF link is often a comprehensive result of combined effect of multiple factors (such as non-linear behavior of the PA, phase noise, inphase/quadrature imbalance (I/Q imbalance), etc.), therefore it is difficult to establish a complete theoretical model. While AI-based method can approach ideal performance through a data-driven approach even without a theoretical model, the compensation effect of predistortion can be improved.

It can be noted that the aforementioned first AI model can be provided by the network device. For example, if the first device is a terminal device, the first AI model is issued or configured by the network device. Optionally, the network device can retain one or more sets of models and corresponding model identifiers (IDs), and can issue or configure the first AI model to the terminal device through broadcasted information, a radio resource control (RRC) signaling, a media access control-control element (MAC CE), downlink control information (DCI), a physical downlink shared channel (PDSCH), etc. Alternatively, the first AI model can be pre-defined by device manufacturers. For example, one or more sets of models and corresponding model ID can be pre-defined by network device manufacturers or terminal device manufacturers. The first AI model can also be obtained through other means, which is not limited in embodiments of the disclosure.

In some embodiments, the input of the first AI model includes the first digital signal and first auxiliary information related to operational performance of the RF link. Correspondingly, in step S510, the first device may perform predistortion on the first digital signal output by the baseband link by using the first AI model as follows. The first device performs predistortion on the first digital signal by using the first AI model based on the first auxiliary information. That is, the first AI model is configured to perform predistortion on the first digital signal based on the first auxiliary information.

Specifically, as illustrated in FIG. 6, in embodiments of the disclosure, the input of the first AI model includes the first digital signal, and the output of the first AI model includes the second digital signal. Optionally, the input of the first AI model may further include the first auxiliary information, so that the first AI model can perform predistortion on the first digital signal based on the first auxiliary information.

In some embodiments, the first auxiliary information may include environmental information or device information of the first device. The environmental information or device information affects the operational performance of the RF link or the requirement for the operational performance of the RF link. In this way, the first AI model can adapt the predistortion result dynamically according to the change in the operational performance of the RF link or requirements for the operational performance of the RF link, therefore, capability of the first AI model to cope with different situations can be improved, and the compensation effect on the RF link can further be improved. For example, assuming that the first auxiliary information is the temperature of the first device, the first AI model can perform predistortion adaptively with respect to the current temperature of the first device, so that the output can be dynamically adapted with respect to different temperatures.

In some embodiments, the first auxiliary information may include at least one of the following.

(1) Temperature of the first device. Specifically, the temperature of the first device refers to the current temperature of the first device. The operational performance of the RF component changes with different temperatures.

(2) Operating voltage of the first device. Specifically, the operating voltage of the first device refers to the current operating voltage of the first device. The operational performance of the RF component changes with different voltages.

(3) Carrier frequency of the first device. Specifically, the carrier frequency of the first device refers to the current carrier frequency of the first device, such as 900 MHz, 4 GHz, 28 GHz, etc.

(4) Communication bandwidth of the first device. For example, 10 MHz, 50 MHz, 100 MHz, etc.

(5) Waveform information used for the first device to send a signal. Specifically, the waveform information indicates a waveform used in current signal transmission, such as orthogonal frequency division multiplexing (OFDM), discrete Fourier transform-spread OFDM (DFT-s-OFDM), etc. Different waveforms have different peak-to-average-power-ratios (PAPRs) and have different requirements for the operational performance of the RF component.

(6) Modulation order supported by the first device. Specifically, the modulation order supported by the first device may be one or more modulation orders supported by the first device. Exemplarily, the modulation order supported by the first device may be the highest modulation order supported by the first device. Modulation with higher order has higher requirement for precision of the RF component, and has different requirement for predistortion.

(7) Continuous operating duration of the first device. Specifically, the operational performance of the RF component may change with the continuous operating duration.

It can be understood that the first auxiliary information may include one of the aforementioned information, or may include multiple aforementioned information. For example, the first auxiliary information may only include the temperature of the first device, or the operating voltage of the first device, or the carrier frequency of the first device. For another example, the first auxiliary information may include the temperature of the first device and the modulation order supported by the first device. For yet another example, the first auxiliary information may include the temperature of the first device and the carrier frequency of the first device. In practical applications, the first auxiliary information may be set according to a scenario requirement, a protocol agreement, or a system agreement, and the implementations will not be elaborated one by one herein.

In some embodiments, the aforementioned signal processing method further includes the following. The first device processes a third digital signal by using a second AI model to obtain an RF performance indicator. The third digital signal is converted from sampling information of at least one RF signal sent by the first device.

The at least one RF signal includes the aforementioned first RF signal. The RF performance indicator indicates performance of the first AI model.

Specifically, the RF performance indicator indicates whether the predistortion performed by the first AI model has effectively cancels out the noise and nonlinear distortion introduced by the RF link.

In practical applications, the first device can sample the RF signal sent by itself to obtain sampling information. Then, necessary processing is performed on the sampling information to convert the sampling information into a digital signal form that can be processed by the second AI model, that is, the third digital signal. The first device uses the second AI model to process the third digital signal, and can utilize a processing capability of the second AI model to determine the RF performance indicator. In comparison, RF performance monitoring with traditional algorithms relies on a RF signal feedback path with high precision and high sampling rate, and the resulting complexity and cost are generally unacceptable. In contrast, the method using the second AI model can achieve effective monitoring and evaluation on the performance even with a RF feedback path with low precision and low sampling rate.

Exemplarily, the aforementioned at least one RF signal can be an RF signal within a specific time period. For instance, a sampling window is pre-configured. If the first device sends at least one RF signal within the first sampling window, the sampling information can be obtained based on at least one RF signal.

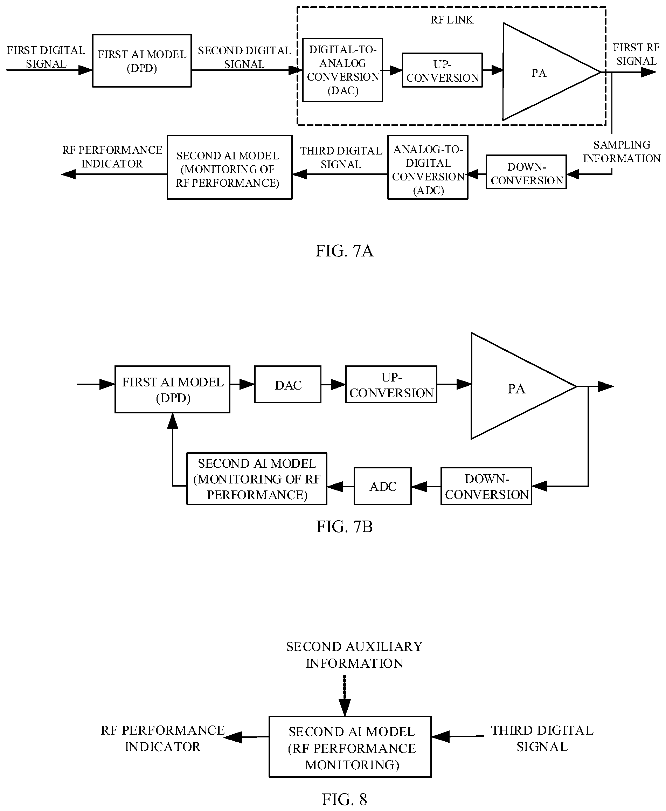

Exemplarily, the third digital signal can be obtained by performing down-conversion and analog-to-digital conversion (ADC) on the sampling information of at least one RF signal. The at least one RF signal includes the first RF signal. As illustrated in FIG. 7A, the RF link of the transmitter in the first device includes the DAC module, the up-conversion module, and the PA. Correspondingly, the first device can sample at least one sent RF signal to obtain the sampling information, perform down-conversion and ADC on the sampling information to obtain the third digital signal, and further process the third digital signal by using the second AI model to obtain the RF performance indicator.

Optionally, the second AI model may be the artificial neural network-based model or may be the machine learning model. The artificial neural network-based model may be, for example, the DNN model, the CNN model, the RNN model, or the transformer model, etc. The machine learning model may be, for example, the logistic regression model, the decision-making-tree model, etc.

Optionally, the second AI model can be provided by the network device. For example, if the first device is a terminal device, the second AI model is issued or configured by the network device. Optionally, the network device can retain one or more sets of models and corresponding model IDs, and can issue or configure the second AI model to the terminal device through the broadcasted information, the RRC signaling, the MAC CE, the DCI, the PDSCH, etc. Alternatively, the second AI model can be pre-defined by device manufacturers. For example, one or more sets of models and corresponding model IDs can be pre-defined by network device manufacturers or terminal device manufacturers. The second AI model can also be obtained through other means, which is not limited in embodiments of the disclosure.

It can be noted that the first AI model and the second AI model can be obtained in pairs, or can be obtained respectively through different means.

In some embodiments, the RF performance indicator is related to a management strategy for the first AI model. Exemplarily, the RF performance indicator can be used for determining the management strategy for the first AI model, that is, the first device or other devices can determine the management strategy for the first AI model according to the RF performance indicator.

Exemplarily, the management strategy for the first AI model includes model fine-tuning, model updating, or model switching. In this way, the first AI model can dynamically adapt to the current RF component.

Optionally, the first device can autonomously determine whether to fine-tune, update, or switch the first AI model according to the RF performance indicator. Alternatively, the first device can send the first RF performance indicator to the second device, and the second device determines whether to fine-tune, update, or switch the first AI model according to the RF performance indicator.

In some embodiments, the RF performance indicator is used as the input of the first AI model. The first AI model is configured to perform, based on the RF performance indicator, predistortion on a fourth digital signal output by the baseband link. The fourth digital signal can be another digital signal output after the baseband link outputs the first digital signal. That is to say, the input of the first AI model can further include the RF performance indicator to adjust the output of the first AI model in real time according to the RF performance indicator. It can be understood that the processing of the first digital signal with the first AI model can be performed based on the latest RF performance indicator which has been determined before the baseband link outputs the first digital signal.

Exemplarily, as illustrated in FIG. 7B, the RF performance indicator is introduced as a feedback and is used as the input of the first AI model to improve the performance of digital predistortion.

In some embodiments, the sampling information includes: a second RF signal determined from at least one RF signal based on a sampling parameter, or statistical information of at least one RF signal. In other words, the sampling information can be an instantaneous sampling result at a certain time, or a statistical sampling result, such as a statistical sampling result of at least one RF signal within a specific time period.

In some embodiments, the sampling parameter for at least one RF signal is configured by the second device. The second device can be a network device. Exemplarily, the sampling parameter for the RF signal for the terminal device can be configured by the network device, such as to be configured through the RRC, the MAC CE, the DCI, etc.

In some embodiments, the sampling parameter include a sampling period and/or a sampling interval.

Exemplarily, the first device can sample the RF signal periodically, and the sampling period can be preconfigured to determine a duration for sampling. For example, if the sampling period includes N time units, then every N time units serve as a sampling window, and the first device samples within every N time units to obtain the sampling information. Herein, N is an integer greater than or equal to 1, and the time unit can be a slot, a subframe, a radio frame, a millisecond, a second, a minute, an hour, etc. The sampling method can be to sample one or more instantaneous RF signals within every N time units, or can be to obtain one statistical sampling result within every N time units.

Exemplarily, the sampling interval can refer to a time interval between RF signal samplings within a sampling period or within a non-periodic sampling window. For example, the sampling interval can be M time units, where M is an integer greater than or equal to 1, and the time unit can be slot, subframe, radio frame, millisecond, second, minute, hour, etc. For example, within the aforementioned period including N time units, the RF signal is sampled every M time units.

In some embodiments, the input of the second AI model can include the third digital signal and second auxiliary information. The second AI model is configured to process the third digital signal based on the second auxiliary information. That is to say, the first device may process the third digital signal by using the second AI model as follows. The first device processes the third digital signal by using the second AI model based on the second auxiliary information.

Specifically, as illustrated in FIG. 8, in embodiment of disclosure, the input of the second AI model includes the third digital signal obtained by processing the sampling information of at least one RF signal, and the output of the second AI model includes the RF performance indicator. Optionally, the input of the second AI model can further include the second auxiliary information, so that the second AI model can process the third digital signal based on the second auxiliary information to obtain the RF performance indicator.

In some embodiments, the second auxiliary information includes the following information A and/or B.

A. Sampling information of at least one digital signal in one-to-one correspondence with at least one RF signal. Each of the at least one digital signal is processed by the first AI model and the RF link to obtain a corresponding RF signal.

It can be understood that each of the aforementioned at least one digital signal is a digital signal before predistortion. That is to say, the first device samples at least one RF signal, correspondingly samples the digital signal before predistortion corresponding to at least one RF signal, and inputs the third digital signal converted from the sampling information based on at least one RF signal, along with the sampling information of at least one digital signal before predistortion, into the second AI model, so that the second AI model can process the third digital signal based on the digital signal before predistortion to obtain the RF performance indicator.

Optionally, the sampling method for the at least one digital signal can be the same as that for the at least one RF signal. For example, if the sampling information of the at least one RF signal is the instantaneous RF signal, correspondingly, the sampling information of the at least one digital signal is an instantaneous digital signal corresponding to the instantaneous RF signal. For another example, if the sampling information of the at least one RF signal is a statistical sampling result of at least one RF signal, correspondingly, the sampling information of at least one digital signal is a statistical sampling result of the at least one digital signal.

The RF performance indicator is used for evaluating whether the predistortion performed by the first AI model has effectively cancels out the noise and non-linear distortion introduced by the RF link. Essentially, the RF performance indicator is used for evaluating whether there is significant noise and non-linear distortion between the RF signal and the digital signal before processing. Therefore, the digital signal before predistortion can serve as an effective basis reference to improve the accuracy of the RF performance indicator.

B. A precoding matrix used for obtaining at least one digital signal.

Theoretically, when the RF link does not introduce significant noise and distortion, a transmitted signal or a bit can be demodulated with extremely high fidelity based on RF signal sampling. Therefore, when the second auxiliary information includes the precoding matrix, the second AI model can demodulate the third digital signal corresponding to the sampling information of the RF signal based on the precoding matrix, so as to obtain a corresponding information bit, and further improve accuracy of the RF performance indicator output by utilizing the information bit.

Optionally, in combination with the aforementioned embodiments, the input of the second AI model can include the third digital signal, the second auxiliary information, and the RF performance indicator. The second AI model is configured to process the third digital signal based on the second auxiliary information and the RF performance indicator.

In some embodiments, the RF performance indicator includes at least one of the following.

(1) RF performance level information.

The RF performance level information may be an overall rating of the RF performance, rather than actual physical metrics. For example, the RF performance level may range from 1 to 5, with a level of 1 indicates the poorest RF performance, while a level of 5 indicates the best RF performance.
(2) Error information of the first RF signal.

The error information can indicate an error between an actual-sampled RF signal and an ideal RF signal. Optionally, when training the second AI model, an ideal RF component can be configured to process the digital signal to obtain the ideal RF signal. At the same time, a non-ideal RF component can be configured to process the digital signal to obtain an RF signal sample. The error between the ideal RF signal and the RF signal sample is used as a label of the RF performance indicator output by the second AI model regarding the RF signal sample, the second AI model is trained based on the above approach to be capable of outputting error information.

Exemplarily, the error information may include at least one of: an error vector magnitude (EVM), a frequency error, or a phase error.

Exemplarily, the EVM may be a mean square error (MSE) of a ratio of an average error vector signal power (between the ideal RF signal and the actual RF signal) to an average reference signal power.

Exemplarily, the frequency error may be a difference between the frequency of the ideal RF signal and the frequency of the actual RF signal.

Exemplarily, the phase error may be a difference between the phase of the ideal RF signal and the phase of the actual RF signal.

(3) Adjacent channel leakage ratio (ACLR).

The ACLR can be used to evaluate the interference caused by a transmitted RF signal to the same or similar communication system.

(4) Accuracy indicator of the information bit obtained by demodulating the third digital signal.

Exemplarily, the accuracy indicator may include a block error rate (BLER), a bit error rate (BER), a symbol error rate (SER), etc. As mentioned above, the second AI model can demodulate the third digital signal based on the precoding matrix to obtain a corresponding information bit. Specifically, the second AI model can further infer the accuracy indicator based on the information bit, that is, the RF performance indicator can include the accuracy indicator for evaluating whether the RF signal can be accurately demodulated to obtain the information bit corresponding to the transmitted signal, thereby evaluating the RF performance.

Through one or more RF performance indicators listed above, the device can determine whether the first AI model has effectively compensated for issues such as non-linear distortion introduced by the RF link, and further determine whether it is necessary to fine-tune, update, or switch the first AI model.

In practical applications, there are various modes for triggering the monitoring of the RF performance indicator. Three optional modes are listed below.

Mode 1: Triggered by the second device.

Specifically, the aforementioned signal processing method may further include the following. The first device receives a trigger signaling from the second device. The trigger signaling is used for triggering the first device to obtain the RF performance indicator.

Exemplarily, when the first device is a terminal device and the second device is a network device, the network device sends a control signaling to trigger the terminal device to perform a one-time monitoring or a periodic monitoring.

Exemplarily, the trigger signaling can be carried in a broadcasted message, an RRC signaling, an MAC CE, DCI, etc.

Optionally, the trigger signaling may further include other information related to the monitoring of the RF performance indicator. Exemplarily, the trigger signaling includes at least one of: type information of the RF performance indicator, monitoring time information of the RF performance indicator, or a threshold of the RF performance indicator.

Exemplarily, the type information of the RF performance indicator can indicate one or more types of information specifically included in the RF performance indicator, such as the RF performance level information, the error information of the first RF signal, the ACLR, the accuracy indicator of the demodulated information bit, etc.

Exemplarily, the monitoring time information of the RF performance indicator may include a monitoring period or indication information for a specific moment.

Exemplarily, the threshold of the RF performance indicator is used for determining whether the RF performance indicator meets a requirement, for example, the threshold is the maximum value of the error information, the maximum value of the ACLR, etc.

Mode 2: Condition-based triggering.

Specifically, in the aforementioned signal processing method, the first device processes the third digital signal by using the second AI model to obtain the RF performance indicator as follows. The first device processes the third digital signal by using the second AI model to obtain the RF performance indicator when a first condition is met.

Optionally, the first condition may be configured by the second device.

Exemplarily, the first condition may include relevant information of the operational performance of the RF link or a variation of such information being greater or less than a threshold. The type of such information and the corresponding threshold may be configured for the first device by the second device, for instance, may be configured for the terminal device by the network device, specifically, may be configured through a broadcasted message, an RRC, an MAC CE, DCI, etc.

Exemplarily, the first condition is related to at least one of: a temperature of the first device; an operating voltage of the first device, a carrier frequency of the first device, a communication bandwidth of the first device, waveform information used for the first device to send a signal, a modulation order supported by the first device, or a continuous operating duration of the first device.

It can be understood that each piece of information listed above is related to the operational performance of the RF link, for example, may affect the operational performance of the RF link, or may have higher requirement for the operational performance of the RF link. Based on this, the first condition may include a comparison between one or more of the aforementioned information and a pre-set threshold meeting the requirement.

Mode 3: Triggered by the first device.

Specifically, the first device can autonomously trigger the monitoring of the RF performance indicator.

Optionally, when the first device autonomously triggers the monitoring of the RF performance indicator, the first device can send a request to the second device and start the monitoring of the RF performance indicator after receiving confirmation from the second device. Specifically, in the aforementioned signal processing method, the first device processes the third digital signal by using the second AI model to obtain the RF performance indicator as follows. The first device sends a first request to the second device. The first request is used for requesting to monitor of the RF performance indicator. The first device processes the third digital signal by using the second AI model to obtain RF performance indicator when the first device receives confirmation for the first request sent by the second device.

Exemplarily, the first request can be carried in a broadcasted message, an RRC signaling, an MAC CE, uplink control information (UCI), etc.

In practical applications, the first device can process the RF performance indicator in various manners after completing the monitoring of the RF performance indicator. For example, the first device can autonomously determine the management strategy for the first AI model based on the RF performance indicator, such as whether to fine-tune, update, or switch (including switching to other models or using a traditional digital predistortion scheme) the model. For another example, the first device inputs the RF performance indicator as a feedback into the first AI model to adjust the output of the first AI model.

Optionally, the first device can report the RF performance indicator to the second device, and the second device determines the management strategy for the first AI model based on the indicator, such as whether to fine-tune, update, or switch the model. Specifically, the aforementioned signal processing method can further include the following. The first device sends report information to the second device. The report information includes the RF performance indicator. The RF performance indicator is used for the second device to determine whether to fine-tune, update, or switch the first AI model.

In some embodiments, the aforementioned signal processing method can further include the following. The first device receives indication information sent by the second device. The indication information indicates the management strategy for the first AI model.

For example, the first device is a terminal device and the second device is a network device. The terminal device reports the RF performance indicator by sending report information. The network device can determine whether to fine-tune, update, or switch the first AI model based on the RF performance indicator, and indicate to the terminal device.

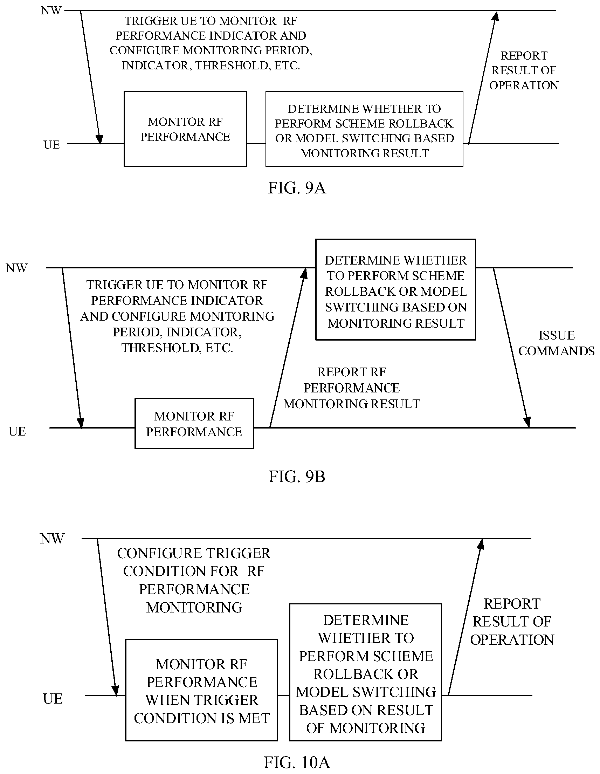

To facilitate understanding, taking the first device as a terminal device (UE) and the second device as a network device (NW) as an example, FIG. 9A and FIG. 9B are schematic diagrams illustrating NW-triggered monitoring of the RF performance indicator. The UE illustrated in FIG. 9A makes decision by itself according to the RF performance indicator, and the UE illustrated in FIG. 9B reports the RF performance indicator.

As illustrated in FIG. 9A, after the NW triggers the UE to monitor the RF performance indicator and configures information, such as monitoring period, indicator type, threshold, etc., for the UE, the UE monitors the RF performance indicator, and can autonomously determine whether to perform scheme rollback or model switching based on the result of monitoring. The UE can report the result to the NW after completing the scheme rollback or model switching.

As illustrated in FIG. 9B, after the NW triggers the UE to monitor the RF performance indicator, and configures information, such as monitoring period, indicator type, threshold, etc., for the UE, the UE monitors the RF performance indicator, and can report the result of monitoring. The NW determines whether to perform scheme rollback or model switching based on the result of monitoring, and issues commands to the UE.

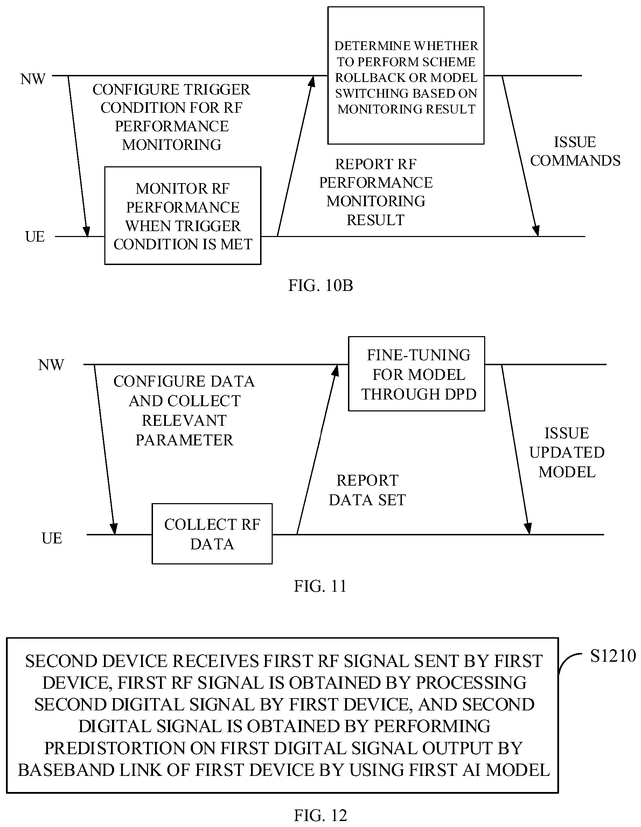

FIG. 10A and FIG. 10B are schematic diagrams illustrating condition-triggered monitoring of the RF performance indicator. The UE illustrated in FIG. 10A makes decision by itself based on the RF performance indicator, and the UE illustrated in FIG. 10B reports the RF performance indicator.

As illustrated in FIG. 10A, the NW configures a trigger condition for monitoring of the RF performance indicator for the UE. When the trigger condition is met, the UE monitors the RF performance indicator and can autonomously determine whether to perform scheme rollback or model switching based on the result of monitoring. The UE can report the result to the NW after completing the scheme rollback or model switching.

As illustrated in FIG. 10B, the network device configures the trigger condition for monitoring of the RF performance indicator for the UE. When the trigger condition is met, the UE monitors the RF performance indicator and can report the result of monitoring. The network device determines whether to perform scheme rollback or model switching based on the result of monitoring, and issues commands to the UE.

In practical applications, RF characteristics of different devices are different, and RF characteristics of the same device may change as some condition changes (such as temperature, voltage, degree of component-aging, etc.), so that digital predistortion needs to dynamically adapt to these changes to ensure performance. Therefore, updating or fine-tuning the AI model based on actual conditions by utilizing the flexibility of the AI model helps ensure the RF performance. "Fine-tune", as an inherent technical term in the field of AI, refers to adjusting the coefficient/weight in a model by training it with new data to make the model better adapt to the new data. In some embodiments, fine-tuning can be conducted to calibrate or optimize the current first AI model.

There are various manners to fine-tune the first AI model. Exemplary manners are provided below.

Manner A: The first device fine-tunes the first AI model.

Exemplarily, the aforementioned signal processing method may further include the following. The first device obtains a loss function based on the second digital signal and a fifth digital signal. The fifth digital signal is obtained by processing a sixth digital signal with the first AI model. The sixth digital signal is converted from the first RF signal. The first device fine-tunes the first AI model based on the loss function.

Specifically, the first device can convert the first RF signal into the sixth digital signal, for example, the first device converts the first RF signal into the sixth digital signal that can be processed by the first AI model through down-conversion and ADC. Then, the first device processes the sixth digital signal with the first AI model to obtain the fifth digital signal. The first device obtains the loss function based on the second digital signal and the fifth digital signal, and fine-tunes the first AI model based on the loss function. The fifth digital signal is obtained by processing the second digital signal through the RF link, followed by down-conversion and ADC (which introduces non-linear distortion caused by the RF component into the digital signal), and subsequently processing the second digital signal with the first AI model. Therefore, a loss between the second digital signal and the fifth digital signal can be gradually reduced through fine-tuning, and the compensation effect of AI predistortion can be gradually improved.

For ease of understanding, assume the function of the first AI model is denoted as $f(\cdot)$, an input signal of the RF circuit is denoted as $x$, a non-liner distortion introduced by the RF circuit is denoted as $g(\cdot)$, an output of the RF circuit is denoted as $g(x)$. The role of the ideal AI predistortion model is $g(\cdot)^{-1}$, then a model training objective can be expressed as: $f_{FT} = \arg\min_{f} L(x, f(g(x)))$

Here, $f_{FT}$ represents the parameters of the ultimately fine-tuned AI predistortion model, and $L(\cdot, \cdot)$ denotes the loss function, such as the mean squared error (MSE) loss function, among others. It can be understood that $x$ is the second digital signal and $f(g(x))$ is the fifth digital signal. The above training objective is to minimize the loss between the second digital signal and the fifth digital signal.

In practical applications, the aforementioned method enables the first device to fine-tune the first AI model based on data newly-generated, and further calibrate or optimize the first AI model.

In some embodiments, the aforementioned signal processing method may further include the following. The first device determines that the fine-tuning of the first AI model is completed when the RF performance indicator meets a second condition.

That is to say, during the model fine-tuning, an output of an RF performance monitoring AI model can be used as an indicator to determine completion of the model fine-tuning of a predistortion model. For example, the second condition may be that the RF performance indicator is greater than a certain threshold or less than a certain threshold.

Manner B: The second device fine-tunes the first AI model.

Specifically, the aforementioned signal processing method further includes the following. The first device sends a sample data set to the second device. The sample data set includes the second digital signal and the sixth digital signal. The sixth digital signal is converted from the first RF signal. The sample data set is used for fine-tuning the first AI model.

According to this method, the data set required for optimization can be collected by the first device and sent to the second device. The second device completes the fine-tuning of the first AI model. Afterwards, the second device can reconfigure or issue the fine-tuned and updated first AI model to the first device.

Optionally, the second device may be configured with the first AI model. Alternatively, the first device may send the first AI model or relevant information of the first AI model (such as a model parameter) to the second device, so that the second device can determine the first AI model. In this way, the second device can process the sixth digital signal in the sample data set by using the first AI model to obtain the fifth digital signal. Then, the loss function is calculated based on the second digital signal and the fifth digital signal, and the first AI model is fine-tuned based on the loss function.

In some embodiments, a relevant parameter of the sample data set is configured by the second device.

In some embodiments, the relevant parameter includes at least one of: a data volume of the sample data set, a collection period of the data set, or a time interval between different samples in the sample data set.

In an example where the first device is a terminal device and the second device is a network device, model training and fine-tuning have high computational requirements, therefore performing fine-tuning by the network device can reduce the computational requirements for the terminal device. FIG. 11 is a schematic diagram illustrating the fine-tuning of the first AI model. As illustrated in FIG. 11, the network device (NW) configures the relevant parameter of the data set for the UE. The UE collects the data set required for optimization, such as $x$ and $g(x)$ in the previous example, and reports the data set to the NW. Optionally, the data set can be reported through an RRC message, UCI, a physical uplink shared channel (PUSCH), etc. After the NW completes the model fine-tuning, the NW issues the updated model to the UE. Optionally, the model can be issued through the RRC message, the MAC CE, DCI, or physical downlink shared channel (PDSCH). The relevant parameter of the data set, such as the data volume of the data set, the collection period of the data set, the time interval between different data samples, etc., can be configured by the NW.

It can be seen that, the technical solutions of embodiments of the disclosure can demonstrate performance advantage in the following aspects.

(1) The non-linear distortion introduced by the RF link is often a comprehensive result of combined effect of multiple factors (such as non-linear behavior of the PA, phase noise, I/Q imbalance, etc.), therefore it is difficult to establish a complete theoretical model. Traditional algorithms rely on theoretical model, while AI-based predistortion can approach ideal performance through a data-driven approach even without a theoretical model.

(2) Different devices have different RF characteristics. Designing and adjusting traditional algorithms for different devices is time-consuming and labor-intensive, which is not practical. However, complicated manual tuning can be avoided in AI-based solution due to learning capability thereof, and model coefficient adapted to specific device can be obtained through learning based on certain data collection.

(3) The RF characteristics of the same device may change as some condition changes (such as temperature, voltage, degree of component-aging, etc.). Traditional methods have limited adjustment flexibility, while the AI-based solution can update/fine-tune the model parameter based on rapid real-time or quasi-real-time data collection to adapt to the changing non-linear behavior of RF.

(4) To make full use of the flexible adjustment and adaptation capabilities of AI-based predistortion model, effective RF performance monitoring is of great significance. RF performance monitoring with traditional algorithms relies on a RF signal feedback path with high precision and high sampling rate, and the resulting complexity and cost are unacceptable. In contrast, AI-based solution can achieve effective monitoring and evaluation on the performance even with a RF feedback path with low precision and low sampling rate.

In a multiple-input-multiple-output (MIMO) system, it is possible that multiple independent RF links serve different antenna units or different groups of antenna units. In this way, different RF links may have different non-linear behaviors. Based on this, building upon the aforementioned embodiments, one or more first AI models and one or more second AI models may be configured, in a case where the first device is equipped with multiple RF links.

In an implementation, multiple first AI models can be configured, each of the first AI models corresponding to one of the multiple RF links; and multiple second AI models can be configured, each of the second AI models corresponding to one of the multiple RF links. Each of the first AI models is configured to compensate for its corresponding RF link, that is, the second digital signal output by the first AI model is input to the corresponding RF link; in this way, the multiple first AI models compensate for the multiple RF links respectively. Each of the second AI models is configured to monitor its corresponding RF link; in this way, the multiple second AI models monitor the multiple RF links respectively.

In an implementation, multiple first AI models can be configured, each of the first AI models corresponding to one of the multiple RF links, and one second AI model corresponding to multiple RF links (as a whole) can be configured. Each of the first AI models is configured to compensate for its corresponding RF link, that is, the second digital signal output by the first AI model is input to the corresponding RF link; in this way, the multiple first AI models compensate for the multiple RF links respectively. The one second AI model is configured to monitor the multiple RF links.

In an implementation, one first AI model corresponding to multiple RF links (as a whole) can be configured, and one second AI model corresponding to multiple RF links (as a whole) can be configured. The one single first AI model is configured to compensate for the multiple RF links. The one single second AI model is configured to monitor the multiple RF links.

In an implementation, one single first AI model corresponding to multiple RF links (as a whole) can be configured, and multiple second AI models can be configured, each of the second AI models corresponding to one of the multiple RF links. The one first AI model is configured to compensate for the multiple RF links. Each of the second AI models is configured to monitor its corresponding RF link; in this way, the multiple second AI models monitor the multiple RF links respectively.

In a case where the first device is equipped with multiple first AI models, operations such as model fine-tuning/model rolling back/model switching can be performed on all models, or can be performed on one or more of the models.

Corresponding to the aforementioned method, a signal processing method executed by the second device is further provided in embodiments of the disclosure. FIG. 12 is a schematic flowchart of a signal processing method according to another embodiment of the disclosure. Optionally, the method can be applied to the system illustrated in FIG. 1, but is not limited thereto. The method includes at least part of the following content.

S1210: A second device receives a first radio frequency (RF) signal sent by a first device. The first RF signal is obtained by processing a second digital signal by the first device, and the second digital signal is obtained by performing predistortion on a first digital signal output by a baseband link of the first device by using a first artificial intelligence (AI) model.

In some embodiments, the aforementioned signal processing method further includes the following. The second device sends first configuration information to the first device. The first configuration information is used for configuring a sampling parameter, and the sampling parameter is used for the first device to determine sampling information of at least one RF signal. The at least one RF signal includes the aforementioned first RF signal. The sampling information is used for obtaining a third digital signal through conversion. The third digital signal is processed by a second AI model to obtain an RF performance indicator. The RF performance indicator indicates a performance of the first AI model.

That is to say, a sampling parameter for RF performance monitoring is configured by the second device.

In some embodiments, the sampling parameter include a sampling period and/or a sampling interval.

In some embodiments, RF performance monitoring can be triggered by the second device, that is, the aforementioned signal processing method further includes the following. The second device sends a trigger signaling to the first device. The trigger signaling is used for triggering the first device to obtain the RF performance indicator. The RF performance indicator indicates the performance of the first AI model.

In some embodiments, the trigger signaling includes at least one of: type information of the RF performance indicator, monitoring time information of the RF performance indicator, or a threshold of the RF performance indicator.

In some embodiments, RF performance monitoring can be triggered by the first device and be confirmed by the second device. The aforementioned signal processing method further includes the following. The second device receives a first request sent by the first device. The first request is used for requesting to monitor the RF performance indicator of the first device. The second device sends confirmation for the first request to the first device. The confirmation indicates to the first device to obtain the RF performance indicator of the first device by using the second AI model.

In some embodiments, the aforementioned signal processing method further includes the following. The second device receives report information sent by the first device. The report information includes the RF performance indicator of the first device. The second device determines a management strategy for the first AI model based on the RF performance indicator.

In some embodiments, the aforementioned signal processing method further includes the following. The second device sends indication information to the first device. The indication information indicates the management strategy for the first AI model.

In some embodiments, the aforementioned signal processing method further includes the following. The second device receives a sample data set sent by the first device. The sample data set includes the second digital signal and a sixth digital signal. The sixth digital signal is converted from the first RF signal. The second device fine-tunes the first AI model based on the sample data set.

Optionally, the first AI model may be configured in the second device. Alternatively, the first device may send the first AI model or related information of the first AI model (such as a model parameter) to the second device, so that the second device can determine the first AI model. In this way, the second device can process the sixth digital signal in the sample data set by using the first AI model to obtain a fifth digital signal, and can further calculate a loss function based on the second digital signal and the fifth digital signal and fine-tune the first AI model based on the loss function.

In some embodiments, a relevant parameter of the sample data set is configured by the second device.

In some embodiments, the relevant parameter includes at least one of: a data volume of the sample data set, a collection period of the data set, or a time interval between different samples in the sample data set.

For specific examples of the method executed by the second device in this embodiment, reference can be made to the relevant descriptions of the second device in the aforementioned embodiments, which will not be elaborated again herein for the sake of brevity.

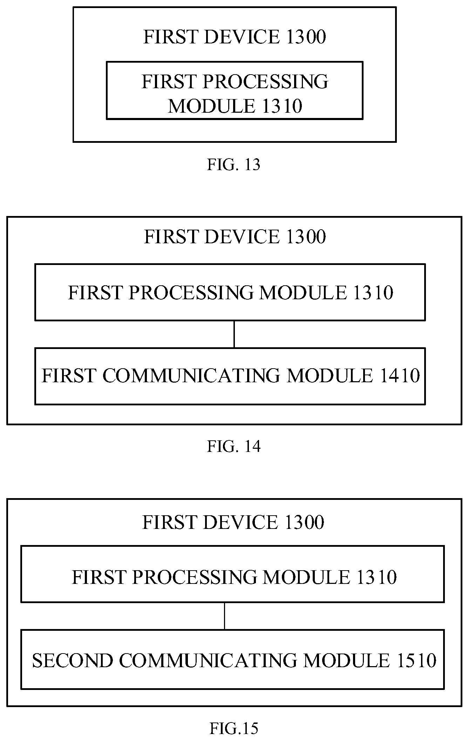

FIG. 13 is a schematic block diagram of a first device 1300 according to an embodiment of the disclosure. The first device 1300 may include a first processing module 1310 configured to perform predistortion on a first digital signal output by a baseband link by using a first artificial intelligence (AI) model to obtain a second digital signal, and processing the second digital signal into a first radio frequency (RF) signal.

In an embodiment, the first processing module 1310 is further configured to process a third digital signal by using a second AI model to obtain an RF performance indicators. The third digital signal is converted from sampling information of at least one RF signal sent by the first device. The at least one RF signal includes the first RF signal. The RF performance indicator indicates a performance of the first AI model.

In an embodiment, the performance of the first AI model is related to a management strategy for the first AI model.

In an embodiment, the management strategy for the first AI model includes model fine-tuning, model updating, or model switching.

In an embodiment, the RF performance indicator is used as an input of the first AI model. The first AI model is configured to perform predistortion on a fourth digital signal output by the baseband link based on the RF performance indicator.

In an embodiment, the sampling information includes a second RF signal determined from the at least one RF signal based on a sampling parameter, or statistical information of the at least one RF signal.

In one embodiment, the sampling parameter for the at least one RF signal is configured by a second device.

In an embodiment, the sampling parameter includes a sampling period and/or a sampling interval.

In an embodiment, the input of the second AI model includes the third digital signal and second auxiliary information. The second auxiliary information includes sampling information of at least one digital signal in one-to-one correspondence with the at least one RF signal, and/or a precoding matrix used for obtaining the at least one digital signal. Each of the at least one digital signal is processed by the first AI model and an RF link to obtain a corresponding RF signal. The second AI model is configured to process the third digital signal based on the second auxiliary information.

In an embodiment, the RF performance indicator includes at least one of: RF performance level information, error information of the first RF signal, an adjacent channel leakage ratio (ACLR), or an accuracy indicator of an information bit obtained by demodulating the third digital signal.

In an embodiment, the error information includes at least one of: an error vector magnitude (EVM), a frequency error, or a phase error.

In an embodiment, as illustrated in FIG. 14, the first device 1300 further includes a first communication module 1410 configured to receive a trigger signaling from the second device. The trigger signaling is used for triggering the first device to obtain the RF performance indicator.

In an embodiment, the trigger signaling includes at least one of: type information of the RF performance indicator, monitoring time information of the RF performance indicator, or a threshold of the RF performance indicator.

In an embodiment, the first processing module 1310 is configured to process the third digital signal by using the second AI model to obtain the RF performance indicator when a first condition is met.

In an embodiment, the first condition is related to at least one of: a temperature of the first device, an operating voltage of the first device, a carrier frequency of the first device, a communication bandwidth of the first device, waveform information used for the first device to send a signal, a modulation order supported by the first device, or a continuous operating duration of the first device.

In an embodiment, as illustrated in FIG. 15, the first device 1300 further includes a second communication module 1510 configured to send a first request to the second device. The first request is used for requesting to monitor the RF performance indicator. The first processing module 1310 is configured to process the third digital signal by using the second AI model to obtain the RF performance indicator, when the first device receives confirmation for the first request sent by the second device.

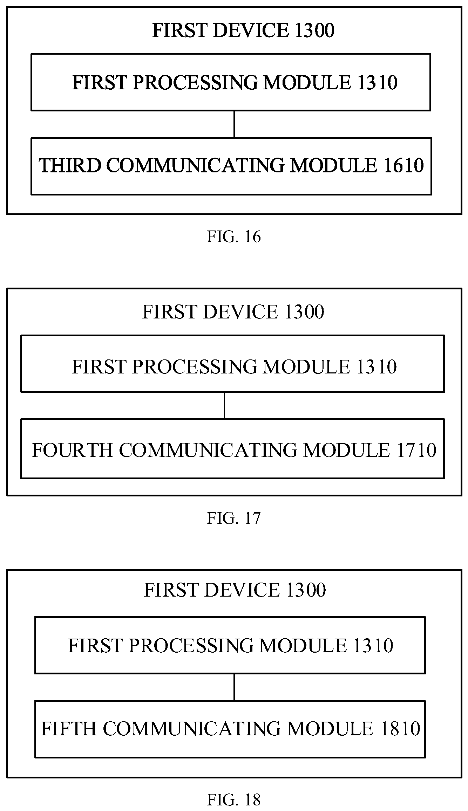

In an embodiment, as illustrated in FIG. 16, the first device 1300 further includes a third communication module 1610 configured to send report information to the second device. The report information includes the RF performance indicator. The RF performance indicator is used for the second device to determine a management strategy for the first AI model.

In an embodiment, the input of the first AI model includes the first digital signal and first auxiliary information related to an operational performance of the RF link. The first processing module 1310 is configured to perform predistortion on the first digital signal by using the first AI model based on the first auxiliary information.

In an embodiment, the first auxiliary information includes at least one of: the temperature of the first device, the operating voltage of the first device, the carrier frequency of the first device, the communication bandwidth of the first device, the waveform information used for the first device to send the signal, the modulation order supported by the first device, or the continuous operating duration of the first device.

In an embodiment, as illustrated in FIG. 17, the first device 1300 further includes a fourth communication module 1710 configured to receive indication information sent by the second device. The indication information indicates the management strategy for the first AI model.

In an embodiment, the first processing module 1310 is further configured to obtain a loss function based on the second digital signal and a fifth digital signal. The fifth digital signal is obtained by processing a sixth digital signal with the first AI model. The sixth digital signal is converted from the first RF signal. The first processing module 1310 is further configured to fine-tune the first AI model based on the loss function.

In an embodiment, the first processing module 1310 is further configured to determine that a fine-tuning of the first AI model is completed when the RF performance indicator meets a second condition.

In an embodiment, as illustrated in FIG. 18, the first device 1300 further includes a fifth communication module 1810 configured to send a sample data set to the second device. The sample data set includes the second digital signal and the sixth digital signal. The sixth digital signal is converted from the first RF signal. The sample data set is used for fine-tuning the first AI model.

In an embodiment, a relevant parameter of the sample data set is configured by the second device.

In an embodiment, the relevant parameter includes at least one of: a data volume of the sample data set, a collection period of the data set, or a time interval between different samples in the sample data set.

The first device 1300 in the embodiment of the disclosure can implement corresponding functions of the first device in the aforementioned method embodiments. For the procedure, function, implementation, and advantage corresponding to each module (sub-module, unit, or assembly, etc.) in the first device 1300, reference can be made to the corresponding illustrations in the aforementioned method embodiments, which will not be elaborated again herein. It can be noted that, the functions of various modules (sub-modules, units, or assemblies, etc.) in the first device 1300 described in embodiment of the disclosure may be implemented by different modules (sub-modules, units, or assemblies, etc.), or may be implemented by the same module (sub-module, unit, or assembly, etc.).

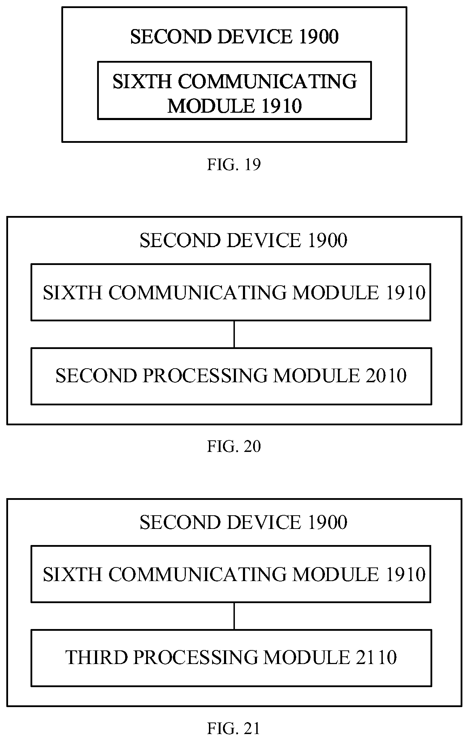

FIG. 19 is a schematic block diagram of a second device 1900 according to an embodiment of the disclosure. The second device 1900 may include a sixth communicating module 1910 configured to receive a first radio frequency (RF) signal sent by a first device. The first RF signal is obtained by processing a second digital signal by the first device. The second digital signal is obtained by performing predistortion on a first digital signal output by a baseband link of the first device by using a first artificial intelligence (AI) model.

In an embodiment, the sixth communicating module 1910 is further configured to send first configuration information to the first device. The first configuration information is used for configuring a sampling parameter. The sampling parameter is used for the first device to determine sampling information of at least one RF signal. The at least one RF signal includes the first RF signal. The sampling information is used for obtaining a third digital signal through conversion. The third digital signal is processed by a second AI model to obtain an RF performance indicator. The RF performance indicator indicates a performance of the first AI model.

In an embodiment, the sampling parameter include a sampling period and/or a sampling interval.

In an embodiment, the sixth communicating module 1910 is further configured to send a trigger signaling to the first device. The trigger signaling is used for triggering the first device to obtain the RF performance indicator. The RF performance indicator indicates the performance of the first AI model.

In an embodiment, the trigger signaling includes at least one of: type information of the RF performance indicator, monitoring time information of the RF performance indicators, or a threshold of the RF performance indicator.

In an embodiment, the sixth communicating module 1910 is further configured to receive a first request sent by the first device. The first request is used for requesting to monitor the RF performance indicator of the first device. The sixth communicating module is configured to send confirmation for the first request to the first device. The confirmation indicates to the first device to obtain the RF performance indicator.

In an embodiment, the sixth communicating module 1910 is further configured to receive report information sent by the first device. The report information includes the RF performance indicator of the first device.

Correspondingly, as illustrated in FIG. 20, the second device 1900 further includes a second processing module 2010 configured to determine a management strategy for the first AI model based on the RF performance indicator.

In an embodiment, the sixth communicating module 1910 is further configured to send indication information to the first device. The indication information indicates the management strategy for the first AI model.

In an embodiment, the sixth communicating module 1910 is further configured to receive a sample data set sent by the first device. The sample data set includes the second digital signal and a sixth digital signal. The sixth digital signal is converted from the first RF signal.

Correspondingly, as illustrated in FIG. 21, the second device 1900 further includes a third processing module 2110 configured to fine-tune the first AI model based on the sample data set.

In an embodiment, a relevant parameter of the sample data set is configured by the second device.

In an embodiment, the relevant parameter includes at least one of: a data volume of the sample data set, a collection period of the data set, or a time interval between different samples in the sample data set.

The second device 1900 in the embodiment of the disclosure can implement corresponding functions of the second device in the aforementioned method embodiments. For the procedure, function, implementation, and advantage corresponding to each module (sub-module, unit, or assembly, etc.) in the second device 1900, reference can be made to the corresponding illustrations in the aforementioned method embodiments, which will not be elaborated again herein. It can be noted that, the functions of various modules (sub-modules, units, or assemblies, etc.) in the second device 1900 described in embodiment of the disclosure may be implemented by different modules (sub-modules, units, or assemblies, etc.), or may be implemented by the same module (sub-module, unit, or assembly, etc.).

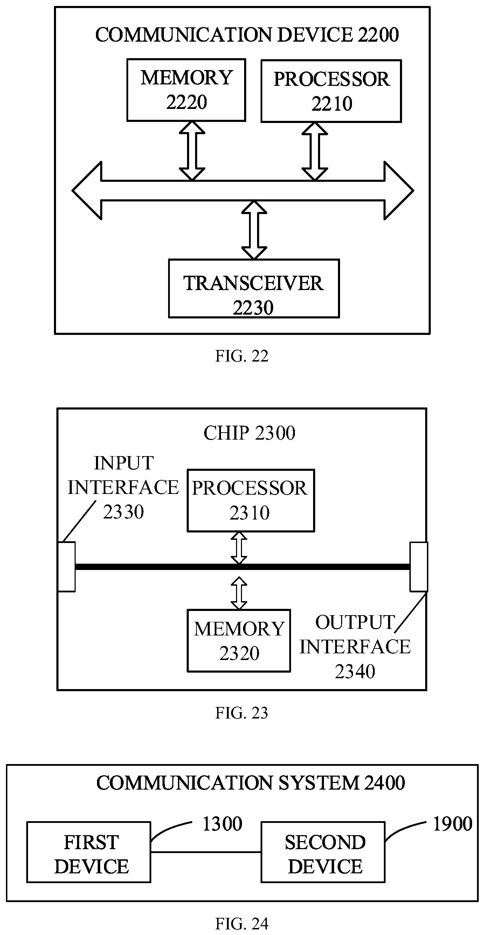

FIG. 22 is a schematic structural diagram of a communication device 2200 according to embodiments of the disclosure. The communication device 2200 includes a processor 2210. The processor 2210 can invoke and execute computer programs stored in a memory to cause the communication device 2200 to implement the methods in embodiments of the disclosure.

In an embodiment, the communication device 2200 may further include a memory 2220. The processor 2210 can invoke and execute computer programs stored in the memory 2220 to cause the communication device 2200 to implement the methods in embodiments of the disclosure.

The memory 2220 may be a separate component independent of the processor 2210, or may be integrated into the processor 2210.

In an embodiment, the communication device 2200 may further include a transceiver 2230. The processor 2210 can control the transceiver 2230 to communicate with other devices, and specifically, to transmit information or data to other devices, or to receive information or data transmitted by other devices.

The transceiver 2230 may include a transmitter and a receiver. The transceiver 2230 may further include an antenna, where one or more antennas can be provided.

In an embodiment, the communication device 2200 may be the first device in embodiments of the disclosure. The communication device 2200 may implement the corresponding procedures implemented by the first device in various methods in embodiments of the disclosure, which will not be elaborated again herein for the sake of brevity.

In an embodiment, the communication device 2200 may be the second device in embodiments of the disclosure. The communication device 2200 may implement the corresponding procedures implemented by the second device in various methods in embodiments of the disclosure, which will not be elaborated herein for the sake of brevity.

FIG. 23 is a schematic structural diagram of a chip 2300 according to embodiments of the disclosure. The chip 2300 includes a processor 2310. The processor 2310 can invoke and execute computer programs stored in a memory to implement the methods in embodiments of the disclosure.

In an embodiment, the chip 2300 may further include a memory 2320. The processor 2310 can invoke and execute computer programs stored in the memory 2320 to execute the method implemented by the first device or the second device in embodiments of the disclosure.

The memory 2320 may be a separate component independent of the processor 2310, or may be integrated into the processor 2310.

In an embodiment, the chip 2300 may further include an input interface 2330. The processor 2310 can control the input interface 2330 to communicate with other devices or chips, and specifically, to receive information or data transmitted by other devices or chips.

In an embodiment, the chip 2300 may further include an output interface 2340. The processor 2310 can control the output interface 2340 to communicate with other devices or chips, and specifically, to transmit information or data to other devices or chips.

In an embodiment, the chip can be applied to the first device in embodiments of the disclosure. The chip can implement corresponding procedures implemented by the first device in various methods in embodiments of the disclosure, which will not be elaborated again herein for the sake of brevity.

In an embodiment, the chip can be applied to the second device in embodiments of the disclosure. The chip can implement corresponding procedures implemented by the second device in various methods in embodiments of the disclosure, which will not be elaborated herein for the sake of brevity.

The chips applied to the first device and the second device may be the same chip or different chips.

It can be understood that the chip mentioned in embodiments of the disclosure may also be referred to as a system-on-chip (SOC).

The aforementioned processor may be a general-purpose processor, a digital signal processor (DSP), a field programmable gate array (FPGA), an application specific integrated circuit (ASIC), or other programmable logic devices, discrete gates or transistor logic components, discrete hardware components. The general-purpose processor may be a microprocessor, or the processor may be any conventional processor or the like.

It can be understood that, the memory in embodiments of the disclosure may be a volatile memory or a non-volatile memory, or may include both the volatile memory and the non-volatile memory. The non-volatile memory may be a read-only memory (ROM), a programmable ROM (PROM), an erasable PROM (EPROM), an electrically EPROM (EEPROM), or flash memory. The volatile memory can be a random access memory (RAM).

It can be understood that, the aforementioned memory is intended for illustration rather than limitation. For example, the memory in embodiments of the disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a direct rambus RAM (DR RAM), etc. In other words, the memory in embodiments of the disclosure is intended to include, but is not limited to, these and any other suitable types of memory.

FIG. 24 is a schematic block diagram of a communication system 2400 according to embodiments of the disclosure. The communication system 2400 includes a first device 1300 and a second device 1900.

The first device 1300 performs predistortion on a first digital signal output by a baseband link by using a first artificial intelligence (AI) model to obtain a second digital signal. The first device 1300 processes the second digital signal into a first radio frequency (RF) signal.

The second device 1900 receives the first RF signal sent by the first device 1300.

The first device 1300 can be configured to perform corresponding functions implemented by the first device in the aforementioned methods, and the second device 1900 can be configured to perform corresponding functions implemented by the second device in the aforementioned method, which will not be elaborated again herein for the sake of brevity.

All or some of the above embodiments can be implemented through software, hardware, firmware, or any other combination thereof. When implemented by software, all or some the above embodiments can be implemented in the form of a computer program product. The computer program product includes one or more computer instructions. When the computer instructions are applied and executed on a computer, all or some the operations or functions of the embodiments of the disclosure are performed. The computer can be a general-purpose computer, a special-purpose computer, a computer network, or other programmable apparatuses. The computer instruction can be stored in a computer-readable storage medium, or transmitted from one computer-readable storage medium to another computer-readable storage medium. For example, the computer instruction can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device such as a server, a data center, or the like which integrates one or more usable media. The usable medium can be a magnetic medium (such as a soft disk, a hard disk, or a magnetic tape), an optical medium (such as a digital video disc (DVD)), or a semiconductor medium (such as a solid state disk (SSD)), etc.

It can be understood that, in various method embodiments of the disclosure, the magnitude of a sequence number of each of the foregoing processes does not mean an execution order, and an execution order of each process should be determined according to a function and an internal logic of the process, which shall not constitute any limitation to an implementation process of embodiments of the disclosure.

It will be evident to those skilled in the art that, for the sake of convenience and brevity, in terms of the specific working procedures of the foregoing systems, apparatuses, and units, reference can be made to the corresponding procedures in the foregoing method embodiments, which will not be elaborated again herein.

The foregoing elaborations are merely implementations of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

**Claims**

1. A signal processing method, comprising:

    performing, by a first device, predistortion on a first digital signal output by a baseband link by using a first artificial intelligence (AI) model to obtain a second digital signal; and
    processing, by the first device, the second digital signal into a first radio frequency (RF) signal.

2. The method of claim 1, further comprising:
processing, by the first device, a third digital signal by using a second AI model to obtain an RF performance indicator, wherein the third digital signal is converted from sampling information of at least one RF signal sent by the first device, the at least one RF signal comprises the first RF signal, and the RF performance indicator indicates a performance of the first AI model.

3. The method of claim 2, wherein the performance of the first AI model is related to a management strategy for the first AI model.

4. The method of claim 3, wherein the management strategy for the first AI model comprises model fine-tuning, model updating, or model switching.

5. The method of any one of claims 2 to 4, wherein the RF performance indicator is used as an input of the first AI model, and the first AI model is configured to perform predistortion on a fourth digital signal output by the baseband link based on the RF performance indicator.

6. The method of any one of claims 2 to 5, wherein the sampling information comprises a second RF signal determined from the at least one RF signal based on a sampling parameter, or statistical information of the at least one RF signal.

7. The method of any one of claims 2 to 6, wherein the sampling parameter for the at least one RF signal is configured by a second device.

8. The method of claim 7, wherein the sampling parameter comprises a sampling period and/or a sampling interval.

9. The method of any one of claims 2 to 8, wherein an input of the second AI model comprises the third digital signal and second auxiliary information, and the second auxiliary information comprises: sampling information of at least one digital signal in one-to-one correspondence with the at least one RF signal, and/or a precoding matrix used for obtaining the at least one digital signal; and each of the at least one digital signal is processed by the first AI model and an RF link to obtain a corresponding RF signal; and
the second AI model is configured to process the third digital signal based on the second auxiliary information.

10. The method of any one of claims 2 to 9, wherein the RF performance indicator comprises at least one of:

    RF performance level information;
    error information of the first RF signal;
    an adjacent channel leakage ratio (ACLR); or
    an accuracy indicator of an information bit obtained by demodulating the third digital signal.

11. The method of claim 10, wherein the error information comprises at least one of:

    an error vector magnitude (EVM);
    a frequency error; or
    a phase error.

12. The method of any one of claims 2 to 11, further comprising:
receiving, by the first device, a trigger signaling from a second device, wherein the trigger signaling is used for triggering the first device to obtain the RF performance indicator.

13. The method of claim 12, wherein the trigger signaling comprises at least one of:

    type information of the RF performance indicator;
    monitoring time information of the RF performance indicator; or
    a threshold of the RF performance indicator.

14. The method of any one of claims 2 to 13, wherein processing, by the first device, the third digital signal by using the second AI model to obtain the RF performance indicator comprises:
processing, by the first device, the third digital signal by using the second AI model to obtain the RF performance indicator when a first condition is met.

15. The method of claim 14, wherein the first condition is related to at least one of:

    a temperature of the first device;
    an operating voltage of the first device;
    a carrier frequency of the first device;
    a communication bandwidth of the first device;
    waveform information used for the first device to send a signal;
    a modulation order supported by the first device; or

a continuous operating duration of the first device.

16. The method of any one of claims 2 to 15, wherein processing, by the first device, the third digital signal by using the second AI model to obtain the RF performance indicator comprises:

sending, by the first device, a first request to a second device, wherein the first request is used for requesting to monitor the RF performance indicator; and
processing, by the first device, the third digital signal by using the second AI model to obtain the RF performance indicator when the first device receives confirmation for the first request sent by the second device.

17. The method of any one of claims 2 to 16, further comprising:
sending, by the first device, report information to a second device, wherein the report information comprises the RF performance indicator, and the RF performance indicator is used for the second device to determine a management strategy for the first AI model.

18. The method of any one of claims 1 to 17, wherein an input of the first AI model comprises the first digital signal and first auxiliary information related to an operational performance of an RF link,
wherein performing, by the first device, predistortion on the first digital signal output by the baseband link by using the first artificial AI model comprises:
performing, by the first device, predistortion on the first digital signal by using the first AI model based on the first auxiliary information.

19. The method of claim 18, wherein the first auxiliary information comprises at least one of:

a temperature of the first device;
an operating voltage of the first device;
a carrier frequency of the first device;
a communication bandwidth of the first device;
waveform information used for the first device to send a signal;
a modulation order supported by the first device; or
a continuous operating duration of the first device.

20. The method of any one of claims 1 to 19, further comprising:
receiving, by the first device, indication information sent by a second device, wherein the indication information indicates a management strategy for the first AI model.

21. The method of any one of claims 1 to 20, further comprising:

obtaining, by the first device, a loss function based on the second digital signal and a fifth digital signal, wherein the fifth digital signal is obtained by processing a sixth digital signal with the first AI model, and the sixth digital signal is converted from the first RF signal; and
fine-tuning, by the first device, the first AI model based on the loss function.

22. The method of claim 21, further comprising:
determining, by the first device, that a fine-tuning of the first AI model is completed when an RF performance indicator meets a second condition.

23. The method of any one of claims 1 to 20, further comprising:
sending, by the first device, a sample data set to a second device, wherein the sample data set comprises the second digital signal and a sixth digital signal, the sixth digital signal is converted from the first RF signal, and the sample data set is used for fine-tuning the first AI model.

24. The method of claim 23, wherein a relevant parameter of the sample data set is configured by the second device.

25. The method of claim 24, wherein the relevant parameter comprises at least one of: a data volume of the sample data set, a collection period of the data set, or a time interval between different samples in the sample data set.

26. A signal processing method, comprising:
receiving, by a second device, a first radio frequency (RF) signal sent by a first device, wherein the first RF signal is obtained by processing a second digital signal by the first device, and the second digital signal is obtained by performing predistortion on a first digital signal output by a baseband link of the first device by using a first artificial intelligence (AI) model.

27. The method of claim 26, further comprising:
sending, by the second device, first configuration information to the first device, wherein the first configuration information is used for configuring a sampling parameter, the sampling parameter is used for the first device to determine sampling information of at least one RF signal, the at least one RF signal comprises the first RF signal, the sampling information is used for obtaining a third digital signal through conversion, the third digital signal is processed by a second AI model to obtain an RF performance indicator, and the RF performance indicator indicates a performance of the first AI model.

28. The method of claim 27, wherein the sampling parameter comprises a sampling period and/or a sampling interval.

29. The method of any of claims 26 to 28, further comprising:
sending, by the second device, a trigger signaling to the first device, wherein the trigger signaling is used for triggering the first device to obtain an RF performance indicator, wherein the RF performance indicator indicates a performance of the first AI model.

30. The method of claim 29, wherein the trigger signaling comprises at least one of:

type information of the RF performance indicator;
monitoring time information of the RF performance indicator; or
a threshold of the RF performance indicator.

31. The method of any of claims 26 to 28, further comprising:

receiving, by the second device, a first request sent by the first device, wherein the first request is used for requesting to monitor an RF performance indicator of the first device; and
sending, by the second device, confirmation for the first request to the first device, wherein the confirmation indicates to the first device to obtain the RF performance indicator.

32. The method of any of claims 26 to 31, further comprising:

receiving, by the second device, report information sent by the first device, wherein the report information comprises an RF performance indicator of the first device; and
determining, by the second device, a management strategy for the first AI model based on the RF performance indicator.

33. The method of any of claims 26 to 32, further comprising:
sending, by the second device, indication information to the first device, wherein the indication information indicates a management strategy for the first AI model.

34. The method of any of claims 26 to 33, further comprising:

receiving, by the second device, a sample data set sent by the first device, wherein the sample data set comprises the second digital signal and a sixth digital signal, and the sixth digital signal is converted from the first RF signal; and
fine-tuning, by the second device, the first AI model based on the sample data set.

35. The method of claim 34, wherein a relevant parameter of the sample data set is configured by the second device.

36. The method of claim 35, wherein the relevant parameter comprises at least one of: a data volume of the sample data set, a collection period of the sample set, and a time interval between different samples in the sample data set.

37. A first device, comprising:
a first processing module configured to perform predistortion on a first digital signal output by a baseband link by using a first artificial intelligence (AI) model to obtain a second digital signal, and processing the second digital signal into a first radio frequency (RF) signal.

38. The first device of claim 37, wherein the first processing module is further configured to:
processing a third digital signal by using a second AI model to obtain an RF performance indicator, wherein the third digital signal is converted from sampling information of at least one RF signal sent by the first device, the at least one RF signal comprises the first RF signal, and the RF performance indicator indicates a performance of the first AI model.

39. The first device of claim 38, wherein the performance of the first AI model is related to a management strategy for the first AI model.

40. The first device of claim 39, wherein the management strategy for the first AI model comprises model fine-tuning, model updating, or model switching.

41. The first device of any one of claims 38 to 40, wherein the RF performance indicator is used as an input of the first AI model, and the first AI model is configured to perform predistortion on a fourth digital signal output by the baseband link based on the RF performance indicator.

42. The first device of any one of claims 38 to 41, wherein the sampling information comprises a second RF signal determined from the at least one RF signal based on a sampling parameter, or statistical information of the at least one RF signal.

43. The first device of any one of claims 38 to 42, wherein the sampling parameter for the at least one RF signal is configured by a second device.

**44.** The first device of claim 43, wherein the sampling parameter comprises a sampling period and/or a sampling interval.

**45.** The first device of any one of claims 38 to 44, wherein an input of the second AI model comprises the third digital signal and second auxiliary information, and the second auxiliary information comprises: sampling information of at least one digital signal in one-to-one correspondence with the at least one RF signal, and/or a precoding matrix used for obtaining the at least one digital signal; and each of the at least one digital signal is processed by the first AI model and an RF link to obtain a corresponding RF signal; and the second AI model is configured to process the third digital signal based on the second auxiliary information.

**46.** The first device of any one of claims 38 to 45, wherein the RF performance indicator comprises at least one of:

RF performance level information;
error information of the first RF signal;
an adjacent channel leakage ratio (ACLR); or
an accuracy indicator of an information bit obtained by demodulating the third digital signal.

**47.** The first device of claim 46, wherein the error information comprises at least one of:

an error vector magnitude (EVM);
a frequency error; or
a phase error.

**48.** The first device of any one of claims 38 to 47, further comprising:
a first communicating module configured to receive a trigger signaling from a second device, wherein the trigger signaling is used for triggering the first device to obtain the RF performance indicator.

**49.** The first device of claim 48, wherein the trigger signaling comprises at least one of:

type information of the RF performance indicator;
monitoring time information of the RF performance indicator; or
a threshold of the RF performance indicator.

**50.** The first device of any one of claims 38 to 49, wherein the first processing module is configured to:
processing the third digital signal by using the second AI model to obtain the RF performance indicator when a first condition is met.

**51.** The first device of claim 50, wherein the first condition is related to at least one of:

a temperature of the first device;
an operating voltage of the first device;
a carrier frequency of the first device;
a communication bandwidth of the first device;
waveform information used for the first device to send a signal;
a modulation order supported by the first device; or
a continuous operating duration of the first device.

**52.** The first device of any one of claims 38 to 47, further comprising a second communicating module configured to send a first request to a second device, wherein the first request is used for requesting to monitor the RF performance indicator; and the first processing module is configured to process the third digital signal by using the second AI model to obtain the RF performance indicator when the first device receives confirmation for the first request sent by the second device.

**53.** The first device of any one of claims 38 to 52, further comprising:
a third communicating module configured to send report information to a second device, wherein the report information comprises the RF performance indicator, and the RF performance indicator is used for the second device to determine a management strategy for the first AI model.

**54.** The first device of any one of claims 37 to 53, wherein an input of the first AI model comprises the first digital signal and first auxiliary information related to an operational performance of an RF link; and the first processing module is configured to:
performing predistortion on the first digital signal by using the first AI model based on the first auxiliary information.

**55.** The first device of claim 54, wherein the first auxiliary information comprises at least one of:

a temperature of the first device;
an operating voltage of the first device;
a carrier frequency of the first device;
a communication bandwidth of the first device;
waveform information used for the first device to send a signal;
a modulation order supported by the first device; or
a continuous operating duration of the first device.

**56.** The first device of any one of claims 37 to 55, further comprising:

a fourth communicating module configured to receive indication information sent by a second device, wherein the indication information indicates a management strategy for the first AI model.

57. The first device of any one of claims 37 to 56, wherein the first processing module is further configured to:

obtaining a loss function based on the second digital signal and a fifth digital signal, wherein the fifth digital signal is obtained by processing a sixth digital signal with the first AI model, and the sixth digital signal is converted from the first RF signal; and

fine-tuning the first AI model based on the loss function.

58. The first device of claim 57, wherein the first processing module is further configured to:

determining that a fine-tuning of the first AI model is completed when an RF performance indicator meets a second condition.

59. The first device of any one of claims 37 to 56, further comprising:

a fifth communicating module configured to send a sample data set to a second device, wherein the sample data set comprises the second digital signal and a sixth digital signal, the sixth digital signal is converted from the first RF signal, and the sample data set is used for fine-tuning the first AI model.

60. The first device of claim 59, wherein a relevant parameter of the sample data set is configured by the second device.

61. The first device of claim 60, wherein the relevant parameter comprises at least one of: a data volume of the sample data set, a collection period of the data set, or a time interval between different samples in the sample data set.

62. A second device, comprising:

a sixth communicating module configured to receive a first radio frequency (RF) signal sent by a first device, wherein the first RF signal is obtained by processing a second digital signal by the first device, and the second digital signal is obtained by performing predistortion on a first digital signal output by a baseband link of the first device by using a first artificial intelligence (AI) model.

63. The second device of claim 62, wherein the sixth communicating module is further configured to:

sending first configuration information to the first device, wherein the first configuration information is used for configuring a sampling parameter, the sampling parameter is used for the first device to determine sampling information of at least one RF signal, the at least one RF signal comprises the first RF signal, the sampling information is used for obtaining a third digital signal through conversion, the third digital signal is processed by a second AI model to obtain an RF performance indicator, and the RF performance indicator indicates a performance of the first AI model.

64. The second device of claim 63, wherein the sampling parameter comprises a sampling period and/or a sampling interval.

65. The second device of any of claims 62 to 64, wherein the sixth communicating module is further configured to:

sending a trigger signaling to the first device, wherein the trigger signaling is used for triggering the first device to obtain an RF performance indicator, wherein the RF performance indicator indicates a performance of the first AI model.

66. The second device of claim 65, wherein the trigger signaling comprises at least one of:

type information of the RF performance indicator;

monitoring time information of the RF performance indicator; or

a threshold of the RF performance indicator.

67. The second device of any of claims 62 to 64, wherein the sixth communicating module is further configured to:

receiving a first request sent by the first device, wherein the first request is used for requesting to monitor an RF performance indicator of the first device; and

sending confirmation for the first request to the first device, wherein the confirmation indicates to the first device to obtain the RF performance indicator.

68. The second device of any of claims 62 to 67, wherein the sixth communicating module is further configured to receive report information sent by the first device, wherein the report information comprises an RF performance indicator of the first device; and

the second device further comprising:

a second processing module configured to determine a management strategy for the first AI model based on the RF performance indicator.

69. The second device of any of claims 62 to 68, wherein the sixth communicating module is further configured to:

sending indication information to the first device, wherein the indication information indicates a management strategy for the first AI model.

70. The second device of any of claims 62 to 69, wherein the sixth communicating module is further configured to receive a sample data set sent by the first device, wherein the sample data set comprises the second digital signal and a sixth digital signal, and the sixth digital signal is converted from the first RF signal; and
the second device further comprising:
a third processing module configured to fine-tune the first AI model based on the sample data set.

71. The second device of claim 70, wherein a relevant parameter of the sample data set is configured by the second device.

72. The second device of claim 71, wherein the relevant parameter comprises at least one of: a data volume of the sample data set, a collection period of the data set, and a time interval between different samples in the sample data set.

73. A first device, comprising: a transceiver, a processor, and a memory, wherein the memory is configured to store computer programs, the transceiver is configured to communicate with other devices, and the processor is configured to invoke and execute the computer programs stored in the memory to cause the first device to implement the method of any one of claims 1 to 25.

74. A second device, comprising: a transceiver, a processor, and a memory, wherein the memory is configured to store computer programs, the transceiver is configured to communicate with other devices, and the processor is configured to invoke and execute the computer programs stored in the memory to cause the second device to implement the method of any one of claims 26 to 36.

75. A chip, comprising: a processor configured to invoke and execute computer programs stored in a memory to cause a device equipped with the chip to implement the method of any one of claims 1 to 25.

76. A chip, comprising: a processor configured to invoke and execute computer programs stored in a memory to cause a device equipped with the chip to implement the method of any one of claims 26 to 36.

77. A computer-readable storage medium configured to store computer programs, wherein when executed by a device, are operable with the device to implement the method of any one of claims 1 to 25.

78. A computer-readable storage medium configured to store computer programs, wherein when executed by a device, are operable with the device to implement the method of any one of claims 26 to 36.

79. A computer program product, comprising computer program instructions which are operable with a computer to implement the method of any one of claims 1 to 25.

80. A computer program product, comprising computer program instructions which are operable with a computer to implement the method of any one of claims 26 to 36.

81. A computer program which is operable with a computer to implement the method of any one of claims 1 to 25.

82. A computer program which is operable with a computer to implement the method of any one of claims 26 to 36.

83. A communication system, comprising:

a first device configured to implement the method of any one of claims 1 to 25;
a second device configured to implement the method of any one of claims 26 to 36.

**100**

FIG. 1

FIG. 2

FIG. 3

PREDISTORTER
(DIGITAL
PREDISTORTION
(DPD))

POWER
AMPLIFIER
(PA)

FIG. 4A

CHARACTERISTIC
OF PREDISTORTER

NON-LINEAR BEHAVIOR
OF POWER AMPLIFIER

ACTUAL OUTPUT OF
POWER AMPLIFIER

FIG. 4B

FIRST DEVICE PERFORMS PREDISTORTION ON FIRST DIGITAL SIGNAL OUTPUT BY BASEBAND LINK BY USING FIRST ARTIFICIAL INTELLIGENCE (AI) MODEL TO OBTAIN SECOND DIGITAL SIGNAL ⟶ S510

FIRST DEVICE PROCESSES SECOND DIGITAL SIGNAL INTO FIRST RADIO FREQUENCY (RF) SIGNAL ⟶ S520

FIG. 5

FIRST DIGITAL SIGNAL

FIRST AI MODEL (DPD)

SECOND DIGITAL SIGNAL

FIRST AUXILIARY INFORMATION

FIG. 6

FIG. 7A

FIG. 7B

FIG. 8

TRIGGER UE TO MONITOR RF PERFORMANCE INDICATOR AND CONFIGURE MONITORING PERIOD, INDICATOR, THRESHOLD, ETC.

NW

REPORT RESULT OF OPERATION

MONITOR RF PERFORMANCE

DETERMINE WHETHER TO PERFORM SCHEME ROLLBACK OR MODEL SWITCHING BASED MONITORING RESULT

UE

**FIG. 9A**

DETERMINE WHETHER TO PERFORM SCHEME ROLLBACK OR MODEL SWITCHING BASED ON MONITORING RESULT

NW

TRIGGER UE TO MONITOR RF PERFORMANCE INDICATOR AND CONFIGURE MONITORING PERIOD, INDICATOR, THRESHOLD, ETC.

ISSUE COMMANDS

REPORT RF PERFORMANCE MONITORING RESULT

MONITOR RF PERFORMANCE

UE

**FIG. 9B**

NW

CONFIGURE TRIGGER CONDITION FOR RF PERFORMANCE MONITORING

REPORT RESULT OF OPERATION

MONITOR RF PERFORMANCE WHEN TRIGGER CONDITION IS MET

DETERMINE WHETHER TO PERFORM SCHEME ROLLBACK OR MODEL SWITCHING BASED ON RESULT OF MONITORING

UE

**FIG. 10A**

NW ————— CONFIGURE TRIGGER
CONDITION FOR RF
PERFORMANCE
MONITORING

DETERMINE WHETHER
TO PERFORM SCHEME
ROLLBACK OR MODEL
SWITCHING BASED ON
MONITORING RESULT

ISSUE
COMMANDS

MONITOR RF
PERFORMANCE
WHEN TRIGGER
CONDITION IS MET

REPORT RF
PERFORMANCE
MONITORING
RESULT

UE —————

FIG. 10B

NW ————— CONFIGURE DATA
AND COLLECT
RELEVANT
PARAMETER

FINE-TUNING
FOR MODEL
THROUGH DPD

ISSUE
UPDATED
MODEL

COLLECT RF
DATA

REPORT
DATA SET

UE —————

FIG. 11

SECOND DEVICE RECEIVES FIRST RF SIGNAL SENT BY FIRST
DEVICE, FIRST RF SIGNAL IS OBTAINED BY PROCESSING
SECOND DIGITAL SIGNAL BY FIRST DEVICE, AND SECOND
DIGITAL SIGNAL IS OBTAINED BY PERFORMING
PREDISTORTION ON FIRST DIGITAL SIGNAL OUTPUT BY
BASEBAND LINK OF FIRST DEVICE BY USING FIRST AI MODEL

S1210

FIG. 12

FIRST DEVICE 1300

FIRST PROCESSING
MODULE 1310

FIG. 13

FIRST DEVICE 1300

FIRST PROCESSING MODULE 1310

FIRST COMMUNICATING MODULE 1410

FIG. 14

FIRST DEVICE 1300

FIRST PROCESSING MODULE 1310

SECOND COMMUNICATING MODULE 1510

FIG.15

FIRST DEVICE 1300

FIRST PROCESSING MODULE 1310

THIRD COMMUNICATING MODULE 1610

FIG. 16

FIRST DEVICE 1300

FIRST PROCESSING MODULE 1310

FOURTH COMMUNICATING MODULE 1710

FIG. 17

FIRST DEVICE 1300

FIRST PROCESSING MODULE 1310

FIFTH COMMUNICATING MODULE 1810

FIG. 18

SECOND DEVICE 1900

SIXTH COMMUNICATING
MODULE 1910

FIG. 19

SECOND DEVICE 1900

SIXTH COMMUNICATING MODULE 1910

SECOND PROCESSING MODULE 2010

FIG. 20

SECOND DEVICE 1900

SIXTH COMMUNICATING MODULE 1910

THIRD PROCESSING MODULE 2110

FIG. 21

FIG. 22

FIG. 23

FIG. 24

## INTERNATIONAL SEARCH REPORT

| International application No. |
| --- |
| **PCT/CN2023/119443** |

### A. CLASSIFICATION OF SUBJECT MATTER

H04B1/04(2006.01)i

According to International Patent Classification (IPC) or to both national classification and IPC

### B. FIELDS SEARCHED

Minimum documentation searched (classification system followed by classification symbols)

IPC: H04B

Documentation searched other than minimum documentation to the extent that such documents are included in the fields searched

Electronic data base consulted during the international search (name of data base and, where practicable, search terms used)

CNTXT, CNKI, VEN, ENTXTC: 补偿, 更新, 模型, 人工智能, 神经网络, 预失真, AI, DPD, artificial intelligence, predistortion, model

### C. DOCUMENTS CONSIDERED TO BE RELEVANT

| Category* | Citation of document, with indication, where appropriate, of the relevant passages | Relevant to claim No. |
| --- | --- | --- |
| X | CN 111900937 A (ZTE CORP.) 06 November 2020 (2020-11-06) description, paragraphs [0034]-[0303] | 1-13, 16, 17, 20-49, 52, 53, 56-83 |
| Y | CN 111900937 A (ZTE CORP.) 06 November 2020 (2020-11-06) description, paragraphs [0034]-[0303] | 14, 15, 18, 19, 50, 51, 54, 55 |
| Y | US 2023268942 A1 (GHANNOUCHI FADHEL et al.) 24 August 2023 (2023-08-24) description, paragraphs [0052], [0072] and [0107] | 14, 15, 18, 19, 50, 51, 54, 55 |
| X | CN 115550118 A (PENG CHENG LABORATORY) 30 December 2022 (2022-12-30) description, paragraphs [0061]-[0100] | 1, 26, 37, 62, 73-83 |
| A | WO 2022268590 A1 (NOKIA TECHNOLOGIES OY) 29 December 2022 (2022-12-29) entire document | 1-83 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **13 May 2024** | **24 May 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/119443**

| Patent document cited in search report | | | Publication date (day/month/year) | Patent family member(s) | | | Publication date (day/month/year) |
|---|---|---|---|---|---|---|---|
| CN | 111900937 | A | 06 November 2020 | None | | | |
| US | 2023268942 | A1 | 24 August 2023 | WO | 2022192986 | A1 | 22 September 2022 |
| | | | | CA | 3193796 | A1 | 22 September 2022 |
| CN | 115550118 | A | 30 December 2022 | None | | | |
| WO | 2022268590 | A1 | 29 December 2022 | None | | | |

Form PCT/ISA/210 (patent family annex) (July 2022)